# EUROPEAN PATENT SPECIFICATION

(11) **EP 1 661 478 B1**
(45) Date of publication and mention of the grant of the patent: **30.10.2013**
(21) Application number: 04771974.5
(22) Date of filing: 20.08.2004
(51) Int. Cl.: A44B 1/08, A44B 11/00, A44B 11/26, A44B 17/00, A44B 18/00, A44B 19/00, A44B 19/26, A44B 19/30, A44B 19/34, A44B 19/38, G06K 19/02

(54) **FASTENER AND SECUREMENT SUBJECT HAVING THE FASTENER SECURED THERETO**
BEFESTIGUNGSVORRICHTUNG UND SICHERUNGSGEGENSTAND, AN DEM DIE BEFESTIGUNGSVORRICHTUNG BEFESTIGT IST
FERMETURE ET ARTICLE DE SECURISATION SUR LEQUEL EST FIXEE LADITE FERMETURE

(30) Priority: 22.08.2003 WO PCT/JP03/10664
(43) Date of publication of application: 31.05.2006
(60) Divisional application: 10151327.3
(73) Proprietor: YKK Corporation, Chiyoda-ku, Tokyo 101 8642 (JP)
(72) Inventor: SUGATA, TOMONARI, 9380044 (JP); NAGAYASU, TAKASHI, 9360053 (JP); SATO, YOSHIAKI, Toyama 938-0025 (JP); SUZUKI, YUGO, 9360007 (JP)
(74) Representative: Casalonga, Axel
(86) International application number: PCT/JP2004/012013
(87) International publication number: WO 2005/018365

(56) References cited:
- EP-A- 1 710 733
- JP-A- 2001 005 561
- JP-A- 2002 042 100
- JP-A- 2002 125 721
- JP-A- 2002 211 626
- JP-A- 2002 298 117
- JP-A- 2002 358 497
- JP-U- 4 077 309

## Description

### TECHNICAL FIELD

The present invention relates to various kinds of fasteners such as a slide fastener, a surface fastener, a snap fastener with a tape, a rail-like fastener with an engaging strip, a cord stopper, a belt adjuster, a swivel and a snap button, and more particularly, to a fastener according to the preamble of claim 1 such as it is e.g. known from JP-A-477 309.

The identification medium described in this specification and the scope of claims is used as a terminology expressing a medium having a readable and/or writable code or an ID (identification) code. Typical identification media include RFID (radio frequency identification), an additive having identification means, an identification information holding matter containing the additive, and a character or graphics in which secret information having the identification means is embedded.

As the RFID, RFID of a silicone chip or RFID of a crystal chip can be used. The RFID is sometimes called radio IC or IC tag. The transmission distance of the RFID is 0 to 10 and several cm, preferably, less than 10 mm. Further, the present invention includes a contact type IC chip which becomes capable of communicating when the IC chip makes contact with a reader/writer.

The identification information holding matter refers to an identification medium produced by, for example, mixing resin or the like with a rare earth element, which is identification information expressing particular information by the kind of the mixed rare earth element, the quantity of its addition and the like, including so-called plagenom (registered trademark), so-called DNA ink (registered trademark) in which synthesized DNA created artificially from part of DNA information of a living thing with ink and the like. By detection using nuclear magnetic resonance phenomenon or optical detection using infrared ray or the like, the synthesized DNA information mixed in ink can be read out.

The character and graphics in which secret information having identification means is embedded refers to an identification medium incorporating therein an identification string reacting to infrared ray or the like, including a case where the identification string incorporated in the medium can be recognized by irradiating with infrared ray or the like and an identification medium provided with characters, picture, pattern and the like, so that those characters, picture, pattern and the like can be recognized visually.

### BACKGROUND ART

Recently, a non-contact type ID tag which makes data communication according to a radio communication method has been incorporated in a product at a production stage in order to execute total product control from production of products, distribution to sale and further, prevent products from being lost, stolen or forged. Use of the ID tag for preventing a patient suffering from dementia from loitering about by attaching the ID tag to clothes has been proposed.

Generally, the non-contact type ID tag is composed of a radio IC chip including a CPU for executing data processing, a memory, a modulating/amplifying unit and the like and its transmitting/receiving antenna. As a power supply for the radio IC chip, a type in which an electromotive force is generated with an electromagnetic wave received from an outside reading unit and the generated electromotive force is used as a power supply for the radio IC chip and a type equipped with a power source battery for the radio IC chip are available.

For an external reading unit to read data stored in a memory of the radio IC chip, in case of the type equipped with no power source battery, a receiving antenna incorporated in the ID tag is provided with a function of receiving a control signal form the reading unit and a function as a coil. An electromotive force is generated in the coil as the receiving antenna with an electromagnetic wave transmitted from the external reading unit, and the radio IC chip is operated with the electromotive force. In case of the type equipped with a power source battery, the radio IC chip is operated with the power source battery without generating any electromotive force in the receiving antenna.

When the radio IC chip is an operable state, necessary data can be fetched out from the memory in the radio IC chip as response data based on a control signal from the reading unit, and the data can be transmitted to the reading unit from a transmitting antenna in response. The transmitted signal in response is received by the receiving antenna of the reading unit, and the response data is analyzed in a control unit of the reading unit. The response data is stored temporarily in the reading unit as the data stored in the radio IC chip, and then transmitted to a control device such as a personal computer.

Updating or rewriting of data stored in the memory of the radio IC chip can be carried out based on a control signal transmitted from the reading unit depending on the performance of the radio IC chip. Upon reading of data from the memory of the radio IC chip or writing of data, various kinds of security means may be provided.

An example of a pull tab for a slide fastener incorporating this kind of ID tag has been disclosed in, for example, Japanese Patent Application Laid-Open No. 2002-125721 (patent document 1). In the slide fastener pull tab disclosed in the publication, as shown in FIG. 51, an IC chip 54 and a coil antenna 53 are embedded in a pull tab main body 51 made of a metal or soft material such as synthetic resin, leather or thick fabric, and a coil antenna 53 and the IC chip 54 are sealed in a narrow glass tube 55.

If the pull tab main body 51 is constructed of a metal material, an embedding hole 52 for the glass tube 55 is formed in the pull tab main body 51, and a transmitting/receiving slit 56 for communicating between inside and outside is formed in a wall face of the embedding hole 52, so that transmission and reception of a signal can be carried out between the coil antenna 53 disposed at the transmitting/receiving slit 56 and the external reading unit. After the glass tube 55 in which the coil antenna 53 and the IC chip 54 are sealed is inserted into the embedding hole 52, an opening end of the embedding hole 52 is sealed with epoxy resin, so as to form the pull tab main body 51 in which the ID tag comprising the coil antenna 53 and the IC chip 54 has been embedded.

If the pull tab main body 51 is composed of synthetic resin, the pull tab main body 51 is composed of a synthetic resin material having electromagnetic transmission property. Like the pull tab main body made of metal, the ID tag sealed in the glass tube 55 is sealed into the embedding hole 52 with the epoxy resin so as to form the pull tab main body 51 having the ID tag embedded therein.

If the pull tab main body 51 is constituted of leather or fabric, an embedding space in which the glass tube 55 is to be inserted is formed in the pull tab main body 51. The ID tag comprising the coil antenna 53 and the IC chip 54 sealed in the glass tube 55 is covered with a metal pipe having a transmitting/receiving long hole and reinforced. The reinforced ID tag is concealed and stored in the burying space.

On the other hand, an example of a clothing button in which the ID tag is embedded integrally has been disclosed in, for example, Japanese Patent Application Laid-Open No. 2002-42100 (patent document 2). As shown in FIG. 52, the clothing button disclosed in the publication is constituted of a button main body 62 made of hard resin and having electromagnetic transmission property. A ring-like concave portion 64 is formed in the surface of the button main body 62, and a sewing leg 61 for sewing the button to clothes or the like is provided protrudedly on the back face thereof.

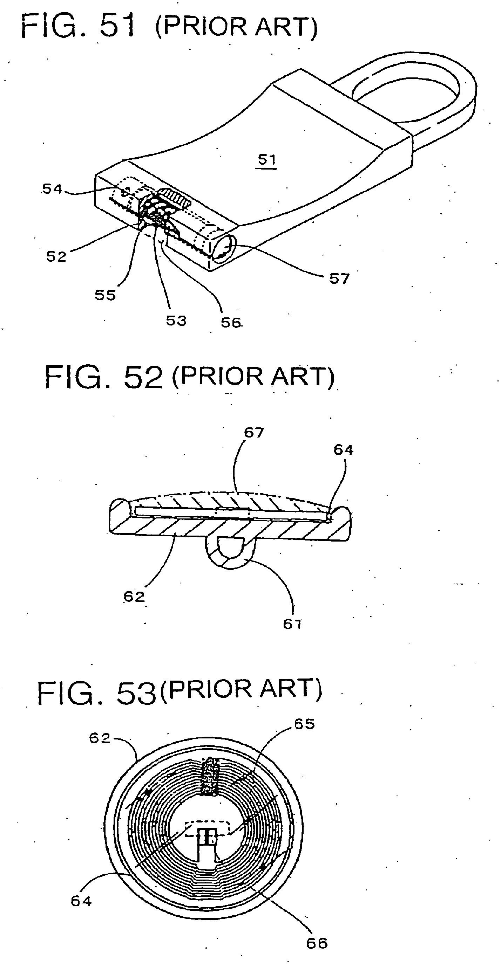

As shown in FIG. 53, a radio IC chip 66 is disposed in the center of the concave portion 64, and a helix coil antenna 65 electrically connected to the radio IC chip 66 is disposed -so as to swirl in the concave portion 64. After the ID tag comprising the radio IC chip 66 and the coil antenna 65 is disposed within the concave portion 64, epoxy resin 67 is poured into the concave portion 64 and hardened, so that the ID tag comprising the coil antenna 65 and the radio IC chip 66 is sealed and water-proofed. Consequently, a button incorporating the ID tag is formed.
Patent document 1: Japanese Patent Application Laid-Open No. 2002-125721
Patent document 2: Japanese Patent Application Laid-Open No. 2002-42100

### DISCLOSURE OF THE INVENTION

### PROBLEMS TO BE SOLVED BY THE INVENTION

To embed the ID tag in the pull tab main body as disclosed in the patent document 1, the ID tag needs to be sealed in the glass tube. Further, when an impact is applied to the pull tab main body 51 or an obstacle collides with the glass tube 55 exposed from the transmitting/receiving slit 56, the glass tube 55 may be broken and then, there is a danger that broken glass particles may scatter from the transmitting/receiving slit 56.

Because the button disclosed in the aforementioned patent document 2 cannot be attached by anything other than by sewing it to clothes or the like, application of the button containing the ID tag is limited. Further, the length of the antenna is limited because the antenna is incorporated in the button, exchange of signals with the ID tag cannot be achieved in a wide range.

Particularly, application of fasteners such as a slide fastener has been expanding, so that it has been widely used in bags, knapsack and clothing and its application style varies from one to another. Thus, the fasteners used for these have been demanded not to use any glass tube and further, other fasteners than the button have been demanded to be provided with the ID tag in a way easy to use. According to the above-described conventional example, data stored in the radio IC chip can be read with the external reading unit only within a small area having a short distance between the ID tag and the reading unit. Thus, development of technology enabling the ID tag to be used in a wide area has been demanded.

When attaching the ID tag to a product such as clothing and bag, it requires labor and time to attach the ID tag to each product separately. In this case, a product manufacturer and a apparel maker have to carry out control from production to sale separately and thus, total product control from production of products, distribution to sale is difficult to execute, which is a problem to be solved.

Further, upon investigating the authenticity of product after it is passed to a customer, the radio IC chip only needs to send a signal in response to a signal from the reading unit, and no wave arrival distance from the radio IC chip is required. In distribution control at stages of manufacturing or sales, an electric wave dispatched from the radio IC chip is preferred to be received by the reading unit stably throughout a predetermined range.

The radio IC chip includes an active type which contains a power supply and a passive type which contains no power supply. The active type includes a problem that a transmission function from the radio IC chip is lost in several years due to the service life of the battery, and the passive type has such a problem that prolonging the wave arrival distance from the radio IC chip is technically highly difficult, so that cost rises or the size of the radio IC chip increases and consequently, it becomes difficult to attach the radio IC chip to the fastener.

These problems are solved by a fastener according to independent claim 1. The dependent claims relate to advantageous embodiments. If a part manufacturer who manufactures and sells fasteners such as slide fasteners attaches the ID tag to individual fasteners, total commodity control can be carried out together with commodity control for the fasteners by only attaching a fastener with the ID tag to a product which is a securement subject. Accordingly, the present invention intends to solve the above-described problems by providing the fastener such as the slide fastener with the radio IC chip or contact type IC chip, so-called plagenom (registered trademark) previously described, so-called DNA ink (registered trademark) produced by mixing synthetic DNA produced artificially from DNA information of a living thing with ink or an identification medium such as a character or graphics in which secret information is embedded.

By attaching an antenna to the securement subject to which a fastener having the radio IC chip attached thereto is secured, it can be used in a wide range. Further, the radio IC chip attached to the fastener is provided with the both active type and passive type functions so as to maintain a powered drive function with a power source for at least some years. Thereby, electric waves from the radio IC chip at the production stage or sales stage can be received by a reading unit over a predetermined range in a stable state, and after the service life of the power source ends, a function of dispatching a signal in response to a signal from the reading unit can be maintained.

The active type radio IC chip and the passive type radio IC chip are attached to the fastener while the both radio IC chips are synchronized with each other or only one radio IC chip of them can be selectively driven. As a consequence, until the service life of the battery is completely consumed by the active type radio IC chip, the radio IC chip can transmit an electric wave over a predetermined range in a stable state, and after the service life of the battery ends, the passive type radio IC chip can maintain a function of transmitting a signal in response to a signal from the reading unit.

### MEANS FOR ACHIEVING THE INVENTION

To achieve the above object, a first basic configuration of the present invention exists in a fastener having fixing means attached thereto and a tape to be secured to a securement subject, the fastener being characterized in that an identification medium is attached at a position of the tape to be covered with the securement subject. The identification medium is a radio IC chip, and an antenna or signal line connected to the radio IC chip can be attached to the fastener. Further, the so-called plagenom (registered trademark), the so-called DNA ink (registered trademark), or the character or graphics in which secret information is embedded can be adopted as the identification medium.

The fixing means refers to fastener elements attached along opposing side edges of a pair of tapes in the case of a slide fastener. In case of a rail-like fastener, the fixing means refers to engaging strips formed on a pair of tapes in an opposing state so that they are continuous in the longitudinal direction of the tape. In the case of a snap button fastener, the fixing means refers to a male engaging member having engaging protrusions formed at a predetermined interval in the longitudinal direction of the tape and a female engaging member having an engaging hole portion or engaging concave portion which the engaging protrusion engages. In the case of a surface fastener, the fixing means refers to hook-like or mushroom-like male engaging elements and loop-like female engaging elements, the elements being formed in plural quantities on a pair of engaging faces opposing each other separately or mixedly.

When adopting the radio IC chip as the identification medium, the reading unit and the radio IC chip can communicate through an antenna connected to the radio IC chip. The antenna can be formed integrally with the radio IC chip and attached to the tape of the fastener or disposed on the tape by using the tape on the fastener. If the tape of the fastener is used, wiring can be formed by using an electrically conductive fiber material for weaving yarns or knitting yarns constituting the tape. The same electrically conductive fiber material can be used as a signal line which connects, for example, a sensor with the radio IC chip.

As a memory equipped on the radio IC chip, it is permissible to use a data rewritable memory, a data non-rewritable memory, a memory capable of writing data or storing program, and the like.

The wiring of the electrically conductive fiber material can be formed by weaving or knitting in plural pieces of the electrically conductive fiber materials with an end of the wiring connected to the radio IC chip and the other end open. Further, this can be constructed by, with both ends of the electrically conductive fiber materials connected to the radio IC chip, weaving or knitting an intermediate portion of the electrically conductive fiber material into the tape in the form of a loop. Moreover, it is also permissible to, with the other ends of at least two electrically conductive fiber materials whose one ends are connected to the radio IC chip kept open, connect the open other ends with each other with appropriate means into the form of a loop.

Alternatively, wiring connected to the radio IC chip can be obtained by pasting, bonding, fusing, printing or embedding the electrically conductive material to, with, on, and in the fastener tape. In this case also, the electrically conductive material can be formed as an antenna or signal line with one end thereof connected to the radio IC chip and the other end kept open, or the intermediate portion of the electrically conductive material can be formed into the form of a loop by connecting the both ends thereof to the radio IC chip. Further, the loop-like antenna can be formed by, with one ends of the two electrically conductive materials connected to the radio IC chip, connecting the other ends to each other with appropriate means.

If the fastener is a slide fastener, it can be constructed as an antenna or signal line by using the electrically conductive fiber material for at least part of fibers constituting a core thread and connecting the electrically conductive fiber materials to the radio IC chip. The loop-like antenna can be formed by using at least two electrically conductive fiber materials, disposing the at least two electrically conductive fiber materials at their intermediate portion inside the core thread with end portions of the electrically conductive fiber materials connected to each other and then connecting end portions not connected with each other to the radio IC chip.

Alternatively, the loop-like antenna can be formed by, with one end of the electrically conductive fiber material disposed inside the core thread connected to the radio IC chip, connecting this to the other end, namely, end portions of the electrically conductive fiber material which is woven or knitted in the fastener tape and whose one end is electrically connected to the radio IC chip. Further, such a loop-like shape can be formed by connecting one end of the electrically conductive material pasted to, bonded to, fused with or embedded in the fastener tape to the radio IC chip, and then connecting the other end of the electrically conductive material with the other end of the electrically conductive fiber material disposed inside the core thread with appropriate means.

Furthermore, by forming continuous fastener elements in the slide fastener by bending an electrically conductive resin monofilament into the form of a coil or zigzag shape, and connecting the fastener element with the radio IC chip, the fastener element can be made to function as an antenna of the radio IC chip.

The fastener of the present invention refers to a fastener having a fastener attached thereto and a tape to be secured to a securement subject, and examples of the fastener includes a slide fastener, a rail-like fastener having an engaging strip, a snap button fastener and a surface fastener. Because the above-mentioned identification medium is attached to a portion of the tape secured to the securement subject, the single fastener unit enables exchange of data between the identification medium and the reading unit.

Furthermore, a first illustrative example of a fastener not falling under the claims of the present invention exists in a fastener having fixing means attached thereto and a tape to be secured to a securement subject, the fastener comprising an identification medium attached to the fastener; and an antenna or a signal line disposed continuously in the longitudinal direction of the tape, the fastener being characterized in that the identification medium is a radio IC chip, and the radio IC chip is connected with the antenna or the signal line.

The fastener of this illustrative example not falling under the claims the present invention refers to a fastener having fixing means attached thereto and a tape to be secured to a securement subject, and examples of the fastener includes a slide fastener, a rail-like fastener having an engaging strip, a snap button fastener and a surface fastener.

A second example of a fastener not falling under the claims of the present invention exists in a slide fastener having a fastener tape to be secured to a securement subject, the slide fastener being characterized in that an identification medium is attached in the vicinity of an end stop of the fastener tape. Examples of the fastener include a slide fastener, a rail-like fastener having an engaging strip, a snap button fastener and a surface fastener.

The configuration of the second example of a fastener not falling under the claims of present invention is equal to the preferred embodiment and the illustrative first example not falling under the claims except that a portion of the tape of the fastener to which the identification medium is attached is limited and that the fastener is limited to the slide fastener. Under this second example not falling under the claims, the antenna can be formed in the same manner as described in the preferred embodiment and the first example not falling under the claims.

A third example of a fastener not falling under the claims of the present invention exists in a slide fastener having a fastener tape to be secured to a securement subject, the slide fastener being characterized in that an identification medium is attached to an end stop of the slide fastener. The configuration of this third example not falling under the claims of the present invention can be made equal to the preferred embodiment and the first and second example not falling under the claims except that the identification medium is attached to the end stop of the slide fastener. The end stop of the third example not falling under the claims includes a top end stop, a bottom end stop, and a separable bottom end stop.

As for the attachment position of the identification medium, the identification medium can be attached to the bottom end stop, top end stop, or the separable bottom end stop. Further, the identification medium can be attached so as to be incorporated in the end stop, or can be attached detachably freely. If it is attached detachably freely, an identification medium insertion hole is formed in the end stop, and the identification medium can be fitted to the hole portion detachably. At this time, when the identification medium is a radio IC chip, the radio IC chip can accommodate an antenna.

As for the antenna, by disposing an electrically conductive fiber material or electrically conductive material in the slide fastener, and the electrically conductive fiber material or the electrically conductive material can be connected to the radio IC chip.

A fourth example of a fastener not falling under the claims of the present invention exists in a fastener having fixing means attached thereto and a tape to be secured to a securement subject, the fastener being characterized in that an identification medium is attached to the fixing means.

A fifth example of a fastener not falling under the claims of the present invention exists in a slide fastener having a fastener tape to be secured to a securement subject, the fastener being characterized in that an identification medium is attached to a fastener element.

Sixth and seventh examples of a fastener not falling under the claims of the present invention exist in a slide fastener having a fastener tape to be secured to a securement subject, the slide fastener being characterized in that an identification medium is attached to a slider, and incorporated in an ornament member which is detachably attached to a pull tab.

An eigth example of a fastener not falling under the claims of the present invention exists in a fastener having fixing means attached thereto and a tape to be secured to a securement subject, the fastener being characterized by including a radio IC chip, a power source battery and an antenna attached thereto. Available examples of the fastener include a slide fastener, a surface fastener, a snap fastener, a rail fastener, a buckle, a cord stopper, a swivel, and a snap button.

A ninth example of a fastener not falling under the claims of the present invention exists in a fastener having a radio IC chip and a shielding material for shielding the radio IC chip. Available examples of the fastener include a slide fastener, a surface fastener, a snap fastener, a rail fastener, a buckle, a cord stopper, a swivel, a snap button, and a belt adjuster.

A tenth example of a fastener not falling under the claims of the present invention exists in a surface fastener having engaging faces capable of engaging in an opposing condition, the surface fastener being characterized in that an identification medium is disposed between the engaging faces and covered. Preferably, the radio IC chip is used as the identification medium, and the surface fastener which covers the radio IC chip is preferred to contain a shielding material for shielding communication with the radio IC chip.

An eleventh example of a fastener not falling under the claims of the present invention exists in a securement subject to which a fastener having an identification medium attached thereto is secured, the securement subject being characterized in that the identification medium is a radio IC chip, and the securement subject has an antenna and signal line electrically connected to the radio IC chip.

A twelfth example of a fastener not falling under the claims of the present invention exists in a securement subject to which a fastener having an identification medium attached thereto is secured, the securement subject being characterized in that the identification medium is a radio IC chip, and the securement subject has a shielding material for covering the radio IC chip and shielding communication with the radio IC chip.

A thirteenth example of a fastener not falling under the claims of the present invention exists in a fastener having an identification medium attached detachably. Available examples of the fastener include a slide fastener, a surface fastener, a snap fastener, a rail fastener, a buckle, a cord stopper, a swivel, a snap button, and a belt adjuster.

### OPERATIONAL EFFECT

Whether it is a fixing device manufactured genuinely or a fixing device manufactured as a forgery can be identified easily by reading data stored in the radio IC chip which is an identification medium or various kinds of information contained in the so-called plagenom (registered trademark) or the so-called DNA ink (registered trademark) by means of a reading unit. Further, a fixing device equipped with the identification medium can be controlled as commodity.

According to the preferred embodiment of the invention, if the fixing device equipped with the identification medium is secured to the securement subject, the identification medium is covered with the securement subject, so that whether the identification medium is attached to the securement subject cannot be recognized form outside. Although existence of the identification medium cannot be recognized from outside, data or information stored in the identification medium or data or information newly stored can be used, thereby being capable of identifying whether the securement subject is real or forged or of carrying out commodity control. Moreover, the identification medium can be attached easily such that the identification medium is not exposed outside of the securement subject without executing any work for attaching the identification medium to the securement subject.

According to the first example of a fastener not falling under the claims of the invention, the fastener includes the radio IC chip which is an identification medium and an antenna for the radio IC chip disposed so as to extend continuously in the longitudinal direction of the tape. Thus, even if a distance between the radio IC chip and the reading unit increases, transmission and reception of data can be carried out. In addition, various kinds of sensors and the radio IC chip can be connected by using the signal line.

The antenna or signal line which extends continuously in the longitudinal direction can be constructed so as to be disposed linearly in the longitudinal direction of the tape, so as to be extended in the longitudinal direction of the tape while being bent in a zigzag fashion in a direction intersecting the longitudinal direction of the tape, or so as to be extended spirally in the longitudinal direction of the tape.

Because the antenna is disposed on the tape of the fastener, the antenna length can be increased, so that an electromotive force generated from the loop-like antenna can be increased and the transmission/reception distance between the radio IC chip and the reading unit can be increased.

By reading data stored in the radio IC chip by means of the reading unit, it can be discriminated easily whether it is a fastener manufactured genuinely or a fastener manufactured as a forgery or whether a securement subject equipped with the radio IC chip is a securement subject manufactured genuinely or as a forgery. Further, the commodity control for a fastener or securement subject equipped with the radio IC chip can be carried out.

As the memory equipped on the radio IC chip, it is permissible to use a data rewritable memory, a data non-rewritable memory, a memory capable of writing data or storing program, and the like.

Communication between the reading unit and the radio IC chip can be carried out through an antenna connected to the radio IC chip. The antenna can be so constructed that it extends continuously in the longitudinal direction of the tape or integrally with the radio IC chip and attached to the tape of the fastener or disposed on the tape by using the tape of the fastener. If the tape of the fastener is used, wiring can be formed by using the electrically conductive fiber material as weaving yarn or knitting yarn constituting the tape. The electrically conductive fiber material can be used as a signal line for connecting, for example, a sensor with the radio IC chip as well as used as the antenna.

As for the wiring of the electrically conductive fiber materials, the electrically conductive fiber materials can be woven or knitted into the tape such that plural pieces of the electrically conductive fiber materials are wired with one end of each wiring connected to the radio IC chip and the other end kept open. Further, it can be woven or knitted into the tape such that, with both ends of the electrically conductive fiber material connected to the radio IC chip, an intermediate portion of the electrically conductive fiber material whose both ends are connected to the radio IC chip is formed in the form of a loop. Further, the loop-like shape can be formed by, with one ends of at least two electrically conductive fiber materials connected to the radio IC chip and the other ends kept open, connecting the open other ends to each other with appropriate means.

The electrically conductive material can be wired as an antenna by pasting, bonding, fusing or embedding it into the tape of the fastener. In this case also, the electrically conductive material can be formed as an antenna with one end thereof connected to the radio IC chip and the other end kept open, or can be formed such that the intermediate portion of the electrically conductive material is in the form of a loop by connecting both ends of the electrically conductive material to the radio IC chip. Further, the loop-like antenna can be formed by, with one ends of two electrically conductive materials connected to the radio IC chip, connecting the other ends to each other with appropriate means.

If the fastener is a slide fastener, at least part of fibers constituting the core thread can be constructed as an antenna or a signal line by using an electrically conductive fiber material therefor, and connecting the electrically conductive fiber material with the radio IC chip. The loop-like antenna can be formed by using at least two electrically conductive fiber materials, disposing the two electrically conductive fiber materials inside the core thread so as to prevent an intermediate portion thereof from short-circuit, with the ends of the electrically conductive fiber materials connected to each other and then, connecting ends opposite to the connected ends to the radio IC chip.

Alternatively, the loop-like antenna can be formed by, with one end of the electrically conductive fiber material disposed inside the core thread connected to the radio IC chip, connecting this to the other end, namely, end portions of the electrically conductive fiber material which is woven or knitted in the fastener tape and whose one end is electrically connected to the radio IC chip. In addition, such a loop-like shape can be formed by connecting one end of the electrically conductive material pasted to, bonded to, fused with, printed on or embedded in the fastener tape to the radio IC chip, and then connecting the other end of the electrically conductive material with the other end of the electrically conductive fiber material disposed inside the core thread with appropriate means.

Furthermore, by forming continuous fastener elements in the slide fastener by bending an electrically conductive resin monofilament into the form of a coil or zigzag shape, and connecting the fastener element with the radio IC chip, the fastener element can be made to function as an antenna or signal line of the radio IC chip.

When the fastener element is made to function as an antenna, it is permissible to keep one end of the fastener element open or form it into a loop by using the electrically conductive fiber material or the electrically conductive material. By using the electrically conductive fiber material for at least part of the fibers constituting the core thread, the electrically conductive fiber material of the core thread can be made to function as a magnetic core member in the case where the fastener element is caused to function as an antenna.

If no power source battery is connected to the radio IC chip, at least it is necessary to form the receiving antenna in the form of a loop and to generate an electromotive force by using the loop portion.

Because the various kinds of effects which the preferred embodiment and the first example not falling under the claims can exert can be exerted also by the second example not falling under the claims of the invention, description thereof is omitted. According to the invention, because the identification medium is disposed in the vicinity of the end stop of the fastener tape, the attachment position of the identification medium can be specified. In addition, even when data stored in the identification medium is read by the reading unit or new data is written into the radio IC chip or the contact type IC chip, which is a data writable identification medium, the positional relation between the identification medium and the reading unit can be set up easily.

Moreover, the vicinity of the end stop of the fastener tape is reinforced with a reinforcement tape, and thus, only by disposing the identification medium between the reinforcement tape and the fastener tape, the identification medium can be attached to the fastener tape easily. If the identification medium is a radio IC chip, the radio IC chip and the antenna can be prevented from slipping out of the fastener tape by the reinforcement tape, so that the radio IC chip and antenna can be protected from damage due to an impact from outside or a collision with an obstacle. In the meantime, the identification medium can be disposed on the reinforcement tape. The end stop in the third basic configuration includes the top end stop, the bottom end stop, and the separable bottom end stop.

The third example not falling under the claims of the invention also can exert the various kinds of effects which the preferred embodiment and the first and second examples not falling under the claims can exert. The end stop in the fourth basic configuration includes the top end stop, the bottom end stop, and the separable bottom end stop.

The identification medium can be attached to the bottom end stop, the top end stop, or the separable bottom end stop. Further, the identification medium can be incorporated in the aforementioned end stop or attached thereto detachably. If the identification medium is a radio IC chip, to attach the radio IC chip detachably, it is permissible to form a hole portion in which the radio IC chip is to be inserted and to fit the radio IC chip to the hole portion detachably. At this time, the radio IC chip can be formed into a type containing an antenna or it is permissible to use the contact type IC chip instead of the radio IC chip. Furthermore, it is permissible to add the so-called plagenom (registered trademark) to the bottom end stop, the top end stop or the separable bottom end stop as an identification medium, or to attach it by printing the so-called DNA ink (registered trademark).

By incorporating the radio IC chip and antenna in any one of the respective components of the slide fastener, the radio IC chip and antenna can be built into the slide fastener at the same time on manufacturing process of the slide fastener.

According to this example not falling under the claims in case where the identification medium is detachably formed on the end stop, when there is a fear that various data or information may be read out illegally by the reading unit or illegal writing may be done, such an illegal access can be blocked by removing the identification medium from the end stop. Further, when a fastener equipped with the identification medium is washed together with a securement subject, the radio IC chip can be prevented from being damaged during washing by removing the identification medium from the fastener.

According to the fourth example of a fastener not falling under the claims of the invention, the identification medium can be attached to the fixing means of the fastener. Examples of the fastener include a slide fastener, a surface fastener, a snap button fastener, and a rail-like fastener, and the identification medium can be attached to the fixing means of these fasteners.

According to the fifth example of a fastener not falling under the claims of the invention, the identification medium can be attached to the fastener element of the slide fastener. The identification medium can be attached to at least one fastener element, or the identification medium can be attached to each of the fastener elements.

According to the sixth and seventh examples of fasteners not falling under the claims of the invention, the identification medium can be attached to the ornament attached to the slider or the pull tab detachably. If the identification medium is a radio IC chip, upon attaching the radio IC chip, a hole portion for incorporating the radio IC chip and antenna is formed in each of the members together with the antenna, and the radio IC chip or the like is fitted to the hole portion detachably. Further, by incorporating the radio IC chip and antenna in any of the respective components of the slide fastener, the radio IC chip and antenna can be built into the slide fastener on manufacturing process of the slide fastener.

The hole portion to which the radio IC chip and the antenna are to be detachably fitted is formed in any of the respective components of the slide fastener. Consequently, when there is a fear that data in the radio IC chip may be read illegally by the reading unit or illegal writing may be done, the radio IC chip and antenna can be removed from the hole portion to prevent such an event. It is permissible to use the contact type IC chip instead of the radio IC chip and antenna.

Because, according to the eighth example not falling under the claims of the invention, the fastener includes the radio IC chip, the power source battery and the antenna, it is not necessary to generate an electromotive force with a signal from the reading unit, and the antenna does not always need to be formed into a loop. However, it is permissible to use an antenna formed in the form of a loop.

If an antenna formed in the form of a loop is used, the radio IC chip attached to the fastener can be equipped with both the active type and passive type functions to provide it with a powered drive function which is useful for at least some years with a power source. As a consequence, an electric wave from the radio IC chip at the manufacturing or sales stage can be received by the reading unit over a predetermined range in a stable state, and after the service life of the power source ends, the function of dispatching a signal in response to a signal from the reading unit can be maintained.

Further, by attaching the active type radio IC chip and passive type radio IC chip to the fastener, the both radio IC chips can be synchronized, or only one radio IC chip can be driven selectively. As a consequence, an electric wave can be dispatched over a predetermined range in a stable state until the service life of the active type radio IC chip ends. After the service life ends, the passive type radio IC chip can be made to maintain a function of dispatching a signal in response to a signal from the reading unit.

Because the fastener includes the power source battery for the radio IC chip, the strength of an electromagnetic wave transmitted from the antenna can be adjusted depending on the quantity of provided power source batteries, so that a desired output can be dispatched from the antenna. As a result, in addition to the reason that the antenna is disposed on the fastener, signals can be exchanged between the radio IC chip and the reading unit over a wide range.

The fastener tape which is separable to the right and left pieces can be so constructed that one fastener tape is provided with a power source battery and the other fastener tape is provided with a radio IC chip. In this case, a switch mechanism is formed in the separable bottom end stop which is capable of separating the both fastener tapes, whereby, when the separable bottom end stop is joined, the switch can be turned ON to supply current and voltage of the power source battery to the radio IC chip, and when the separable bottom end stop is separated, the switch can be turned OFF to stop the supply of current and voltage from the power source battery to the radio IC chip. Consequently, the operation of the radio IC chip can be turned ON/OFF by separating or joining the separable bottom end stop.

In the case where the radio IC chip and antenna are attached to one of male and female members of the snap button, a power source battery is attached to the other member, so that, by engaging the male member with the female member, the power source battery is connected to the radio IC chip and when the male and female members are separated, the power source battery is shielded from the radio IC chip, thereby forming a switch mechanism between the male and female members.

By attaching the radio IC chip and antenna to the fastener, the radio IC chip and antenna can be provided automatically on a member used together with the fastener such as a belt, without any special attachment work.

According to the ninth example of a fastener not falling under the claims of the invention, the shielding material composed of an electrically conductive metal sheet or the like is disposed at a portion covering the radio IC chip and antenna. Further, the shielding material can be attached to the fastener detachably. By shielding the radio IC chip and antenna with the shielding material, exchange of signals with the reading unit can be inhibited, and it is possible to protect data stored in the radio IC chip from an illegal access, thereby raising security. Likewise, changed data can be prevented from being stored in the radio IC chip through the reading unit.

The shielding material can be formed of a metal sheet, a metal net, resin containing an electrically conductive material or the like.

According to the tenth example of a fastener not falling under the claims of the invention, by providing the surface fastener which covers the identification medium with a detachable shielding material, the identification medium can be arbitrarily covered with the shielding material, and it is possible to inhibit exchange of signals with the reading unit and to prevent various data possessed by the identification medium from being accessed illegally, thereby raising security. Likewise, changed data can be prevented from being stored in the identification medium through the reading unit. In addition, the identification medium is sandwiched between engaging faces of the surface fastener. Therefore, only by mounting the identification medium on the engaging face of the surface fastener, or embedding or adding it, the identification medium can be attached to the surface fastener easily.

According to the eleventh example of a fastener not falling under the claims of the invention, the antenna or signal line for the radio IC chip, or various kinds of sensors can be disposed on the securement subject, and the various sensors can be connected to the radio IC chip through the signal line. Further, the antenna can be connected to the radio IC chip. This connection can be carried out through the electrically conductive material or the electrically conductive fiber material disposed on the tape of the fastener.

By exchanging signals between the radio IC chip possessed by the fastener secured to the securement subject and the reading unit, it can be determined whether or not the securement subject is real or forged, and the commodity control can be carried out. Moreover, because the securement subject has the antenna, exchange of signals can be executed even if the distance to the reading unit is increased.

Thus, by measuring the blood pressure of a person wearing a securement subject provided with a blood pressure sensor, according to a detection condition set up in the radio IC chip for measuring the blood pressure every predetermined time, or when abnormal pressure indicates, its result can be stored in the memory of the radio IC chip. Further, connection between various sensors and the radio IC chip is carried out through the signal line, and the stored detection result can be transmitted to the reading unit through the antenna according to the preliminarily set condition.

Further, because the radio IC chip can be attached to clothes only by attaching the fastener, for example, it is possible to automatically instruct a washing machine about how to wash during washing of clothes. In addition, if a temperature sensor is attached to clothes, the body temperature of a person wearing the clothes can be detected, and the detected body temperature can be transmitted to an air conditioner from the radio IC chip, in order to automatically adjust the temperature.

By attaching a position sensor to clothes of a patient suffering from dementia, the current position of the patient can be monitored at real time. Thus, only by attaching a fastener having the radio IC chip and antenna to the securement subject, a detection signal from various sensors attached to the securement subject can be fetched out in various fashions and used for practical purpose.

According to the twelfth example of a fastener not falling under the claims of the invention, the fastener equipped with the radio IC chip includes a slide fastener, a surface fastener, a snap fastener, a rail fastener, a buckle, a cord stopper, a swivel, a snap button, and a belt adjuster.

According to this example not falling under the claims of the present invention, because the securement subject for shielding the radio IC chip is provided on the securement subject, the size of the shielding material can be set to one capable of covering the radio IC chip and antenna. The shielding material can be formed by using a metal sheet, a metal net, resin containing an electrically conductive material or the like. Exchange of data through the antenna can be inhibited by the shielding material, thereby securing security of the radio IC chip. Because the radio IC chip or antenna can be covered with the shielding material, transmission of a current position can be inhibited to keep the privacy of individual.

Because, according to the thirteenth example of a fastener not falling under the claims of the invention, the fastener is provided with the identification medium detachably, protection of illegal access and exchange of the identification medium storing desired data can be carried out easily. As a consequence, security to the identification medium can be raised, and changed data can be prevented from being transferred to the identification medium through the reading unit.

For example, when a fastener equipped with the radio IC chip or the contact type IC chip is washed together with the securement subject, the IC chip can be protected from a damage by removing the IC chip from the fastener. If the IC chip is incorporated in the fastener, the member of the fastener incorporating the IC chip is preferred to be formed of a member having a low magnetic permeability such as ester, polyacetal, polyethylene terephthalate, for example, nylon or poly synthetic resin material.

### BRIEF DESCRIPTION OF THE DRAWINGS

[FIG. 1] FIG. 1 is a view showing the arrangement position of a radio IC chip according to the preferred embodiment of the invention.
[FIG. 2] FIG. 2 is a longitudinal sectional view of FIG. 1.
[FIG. 3] FIG. 3 is a diagram showing the arrangement positions of the radio IC chip and an antenna line or signal line.
[FIG. 4] FIG. 4 is a view showing an example of the preferred embodiment in which the radio IC chip is attached to a surface fastener.
[FIG. 5] FIG. 5 is a view showing a modification in which the radio IC chip is attached to the surface fastener.
[FIG. 6] FIG. 6 is a view showing an example of the preferred embodiment in which the radio IC chip is attached to a snap fastener.
[FIG. 7] FIG. 7 is a view showing an example of the preferred embodiment in which the radio IC chip is attached to a rail-like fastener.
[FIG. 8] FIG. 8 is a view showing a situation in which a radio IC chip of the first example not falling under the claims is disposed in the vicinity of a bottom end stop.
[FIG. 9] FIG. 9 is a view showing a modification of the first example not falling under the claims.
[FIG. 10] FIG. 10 is a view showing other modification of the first example not falling under the claims.
[FIG. 11] FIG. 11 is a view showing an illustration of the first example not falling under the claims in which a power source battery is provided.
[FIG. 12] FIG. 12 is a view showing a modification of the first example not falling under the claims in which a power source battery is provided.
[FIG. 13] FIG. 13 is a view showing another modification of the first example not falling under the claims in which the power source battery is provided.
[FIG. 14] FIG. 14 is a view for explaining a switch mechanism of FIG. 13_{.}
[FIG. 15] FIG. 15 is a view showing an example not falling under the claims in which the radio IC chip is secured detachably.
[FIG. 16] FIG. 16 is a view showing a modification not falling under the scope of the claims in which the radio IC chip is secured detachably.
[FIG. 17] FIG. 17 is a view showing another modification not falling under the scope of the claims in which the radio IC chip is secured detachably.
[FIG. 18] FIG. 18 is a view showing still another modification not falling under the scope of the claims in which the radio IC chip is secured detachably.
[FIG. 19] FIG. 19 is a view showing an example of the preferred embodiment in which an electrically conductive fiber material is used as a weaving yarn.
[FIG. 20] FIG. 20 is a view showing a modification of the preferred embodiment in which the electrically conductive fiber material is used as a weaving yarn.
[FIG. 21] FIG. 21 is a view showing an example of the preferred embodiment in which the electrically conductive fiber material is used as a knitting yarn.
[FIG. 22] FIG. 22 is a view showing an example of the preferred embodiment in which an electrically conductive material is attached to a fastener tape.
[FIG. 23] FIG. 23 is a view showing a modification of the preferred embodiment in which the electrically conductive material is attached to the fastener tape.
[FIG. 24] FIG. 24 is a view showing an example of the preferred embodiment in which the electrically conductive material is embedded in the fastener tape.
[FIG. 25] FIG. 25 is a view showing an example of the preferred embodiment in which the radio IC chip is provided on an element while the electrically conductive fiber material is provided on a core thread.
[FIG. 26] FIG. 26 is a partially enlarged view showing that a fastener element of the preferred embodiment having an antenna function is coil-like.
[FIG. 27] FIG. 27 is a partially enlarged view showing that a fastener element of the preferred embodiment having an antenna function is zigzag-like.
[FIG. 28] FIG. 28 is a view showing an example not falling under the claims in which the radio IC chip is attached to a top end stop.
[FIG. 29] FIG. 29 is a view showing an example not falling under the claims in which the radio IC chip is attached to a bottom end stop.
[FIG. 30] FIG. 30 is a view showing a modification not falling under the claims in which the radio IC chip is attached to the bottom end stop.
[FIG. 31] FIG. 31 is a view showing an example not falling under the claims in which the radio IC chip is attached to a slider.
[FIG. 32] FIG. 32 is a view showing an example not falling under the claims in which a contact type IC chip is attached to an ornament member.
[FIG. 33] FIG. 33 is a view showing a modification not falling under the claims in which the radio IC chip is attached to the ornament member.
[FIG. 34] FIG. 34 is a view showing an example not falling under the claims in which the radio IC chip is attached to an attachable/detachable pull tab.
[FIG. 35] FIG. 35 is a view showing a modification not falling under the claims in which the radio IC chip is attached to the attached/detachable pull tab.
[FIG. 36] FIG. 36 is a view showing an example not falling under the claims in which the radio IC chip is attached to a buckle.
[FIG. 37] FIG. 37 is a view showing an example not falling under the claims in which the contact type IC chip is attached to a belt adjuster.
[FIG. 38] FIG. 38 is a view showing an example not falling under the claims in which plagenom (registered trademark) is attached to a swivel.
[FIG. 39] FIG. 39 is a view showing an example not falling under the claims in which the radio IC chip is attached to a cord stopper.
[FIG. 40] FIG. 40 is a view showing a modification not falling under the claims in which the radio IC chip is attached to the cord stopper.
[FIG. 41] FIG. 41 is a view showing a relation between a cord stopper and a securement subject.
[FIG. 42] FIG. 42 is a view showing an example not falling under the claims in which the radio IC chip is attached to a snap button.
[FIG. 43] FIG. 43 is a view showing an example not falling under the claims in which a shielding material is disposed.
[FIG. 44] FIG. 44 is a view showing a modification not falling under the claims in which the shielding material is disposed.
[FIG. 45] FIG. 45 is a view showing another modification not falling under the claims in which the shielding material is disposed.
[FIG. 46] FIG. 46 is a view showing still another modification not falling under the claims in which the shielding material is disposed.
[FIG. 47] FIG. 47 is a view showing an example of the preferred embodiment in which a slide fastener having a radio IC chip is secured to a securement subject.
[FIG. 48] FIG. 48 is a view showing a modification of the preferred embodiment in which the slide fastener having the radio IC chip is secured to the securement subject.
[FIG. 49] FIG. 49 is a view showing another modification of the preferred embodiment in which the slide fastener having the radio IC chip is secured to the securement subject.
[FIG. 50] FIG. 50 is a view showing still another modification in which the slide fastener having the radio IC chip is secured to the securement subject.
[FIG. 51] FIG. 51 is a view showing a conventional example.
[FIG. 52] FIG. 52 is a view showing another conventional example.
[FIG. 53] FIG. 53 is a sectional view of FIG. 52.

### DESCRIPTION OF REFERENCE NUMERALS

- 1: slide fastener
- 2: slider
- 2a: hole portion
- 3: pull tab
- 4: fastener tape
- 5: top end stop
- 6: bottom end stop
- 6a: hole portion
- 7: element
- 8: reinforcement tape
- 9: insert pin
- 10: box pin
- 11: core thread
- 12: electrically conductive fiber material
- 13: electrically conductive material
- 15: separable bottom end stop
- 20: identification medium (radio IC chip, contact type IC chip and the like)
- 21: antenna
- 22: power source battery
- 23: signal line
- 24: reading unit
- 25: securement subject
- 26: sewing line
- 27a, 27b: engaging portion
- 28: sensor
- 29: signal line
- 30: surface fastener
- 31: snap fastener
- 32a: snap fastener tape
- 33: rail-like fastener
- 33a: rail-like fastener tape
- 35: belt
- 36: buckle
- 36a: male member
- 36b: female member
- 36c: accommodating portion
- 37: belt adjuster
- 38: swivel
- 38a: hole portion
- 39: cord stopper
- 39a: string
- 39b: lid
- 40: snap button
- 40a: female button
- 40b: male button
- 40c: lid
- 45: shielding material
- 46: solar battery
- 51: pull tab main body
- 52: embedding hole
- 53: coil antenna
- 54: IC chip
- 55: glass tube
- 56: transmitting/receiving slit
- 61: sewing leg
- 62: button main body
- 64: ring-like concave portion
- 65: helix coil antenna
- 66: radio IC chip

### BEST MODE FOR CARRYING OUT THE INVENTION

Hereinafter, a preferred embodiment of the present invention as well as several illustrative examples not falling under the claims will be described in detail with reference to the accompanying drawings. A fastener of the preferred embodiment of present invention includes various kinds of fasteners such as a slide fastener, a surface fastener, a snap fastener with tape, a rail-like fastener, a buckle, a cord stopper, a belt adjuster, a swivel, a snap button as, for example, a fixing device for bags and various kinds of clothing such as sport wear. In the following embodiments, the arrangement configuration of the ID tag comprising the radio IC chip and antenna with respect to the aforementioned fastener, and the antenna structure for the ID tag will be described as main feature portions. However, the present invention is not restricted to the identification medium such the radio IC chip and antenna, and it is permissible to adopt an identification medium such as an additive having identification means, an identification information holding matter containing the additive, and characters and graphics in which secret information having the identification means is embedded.

According to a typical embodiment of the ID tag applied to this preferred embodiment, a radio IC chip having a memory for storing data such as identification information of an identifying object and an antenna are electrically connected to each other to construct a response circuit. As the response circuit, the radio IC chip incorporates, for example, a detection circuit, a power supply circuit, a control circuit, a memory circuit, a modulation circuit, an oscillation circuit and the like.

Further, the present invention includes a non-battery type ID tag in which electric power is supplied to each circuit by electromagnetic induction from outside or a battery built-in type ID tag which incorporates a battery as a power source. Thus, the power circuit refers to a power circuit in case where a power source battery is disposed on the side loaded with the radio IC chip, and a power source circuit using an electromotive force generated from an electromagnetic wave of a signal transmitted from a loop-like antenna when the loop-like antenna receives a transmission signal form a reading unit located outside.

The radio IC chip of the present invention refers to a radio IC chip having various control modes such as a type which fetches data stored in a memory of the radio IC chip according to a transmission signal from the reading unit and sends to the reading unit as a response signal, a type capable of rewriting or updating data or program stored in the memory in the radio IC chip according to a transmission signal form the reading unit, and a type in which a control unit in the radio IC chip is capable of sending data stored in the memory automatically to the reading unit.

The configuration of the radio IC chip of the present invention is not restricted to the above-described configuration or a configuration described below but may be modified in various ways.

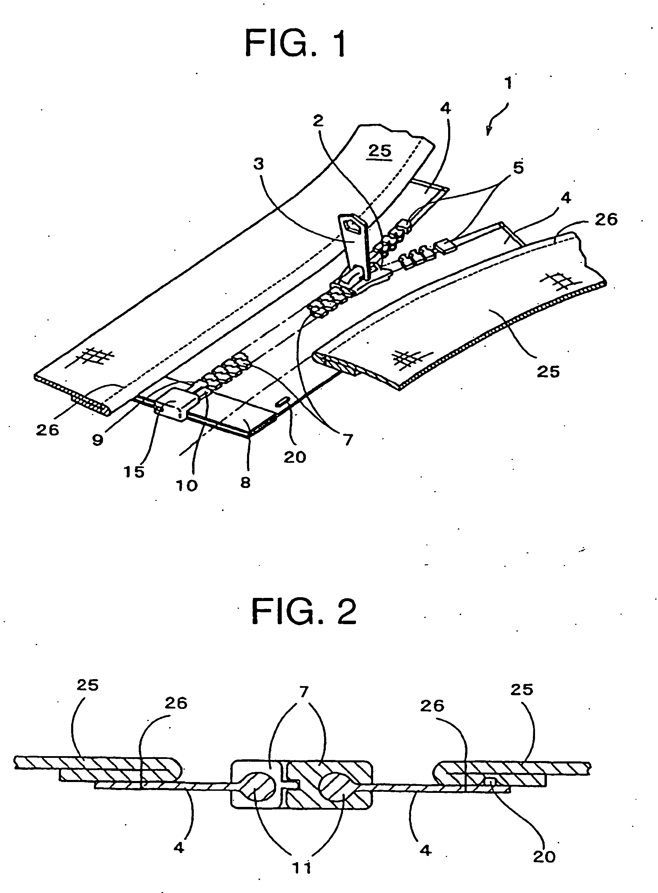

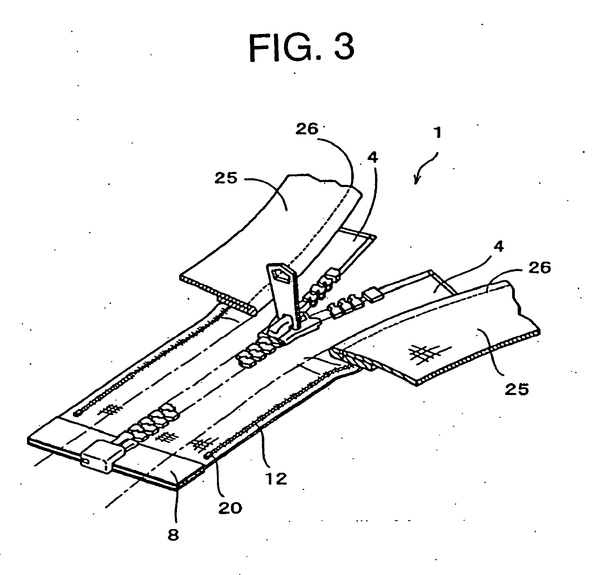

FIG. 1 shows the preferred embodiment of the present invention, and is a perspective view schematically showing the arrangement position of the ID tag comprising the radio IC chip and antenna secured to a slide fastener. FIG. 2 is a longitudinal sectional view of the slide fastener. FIG. 3 is a perspective view schematically showing the arrangement positions of the radio IC chip to be secured to the slide fastener and an antenna line or signal line formed on a fastener tape.

In FIG. 1, reference numeral 1 designates a slide fastener secured to a securement subject 25 such as clothes and bags, and plural elements 7, a top end stop 5, a separable bottom end stop 15, an insert pin 9, a box pin 10, a slider 2, a pull tab 3, a reinforcement tape 8 and the like are attached to a fastener tape 4.

The fastener tape is constituted of a fiber tape-like base fabric produced by weaving or knitting, for example, a synthetic resin fiber, an unwoven fabric, a synthetic resin sheet or the like. The fastener element is constituted of continuous elements such as coil-like elements produced by winding a synthetic resin monofilament into a coil, and zigzag-like elements produced by forming a U-shaped bent portion in the lateral direction on a plane into a zigzag shape continuous up/down alternately in the.longitudinal direction. This is the same for the aforementioned slider, top/bottom end stops, reinforcement sheet-like member and separable bottom end stop, and the size, material and structure can be changed in various ways.

A radio IC chip 20 is attached at a position near an edge of the fastener tape 4 which is covered by being secured to the securement subject 25. The radio IC chip 20 can be attached to the fastener tape 4 by using appropriate attachment means such as pasting, bonding, fusion or injection molding. An antenna (not shown) is formed integrally with the radio IC chip 20.

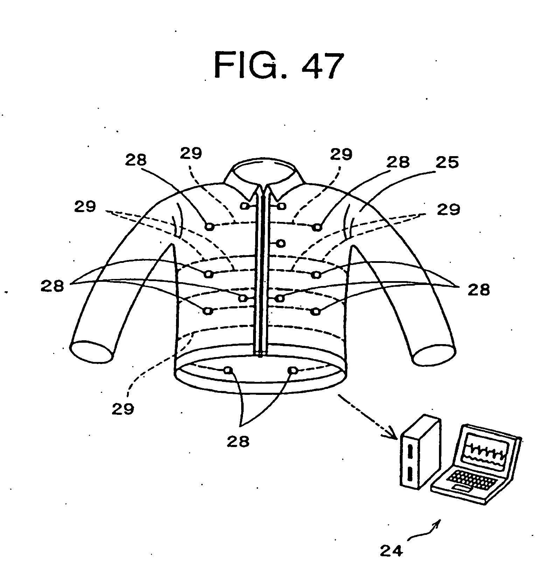

As shown in FIG. 2, the radio IC chip 20 can be disposed in a state in which it is invisible by sewing the slide fastener 1 along a sewing line 26 of the securement subject 25 together with an antenna for transmitting and receiving a signal with the reading unit 24 located outside shown in FIG. 47.

As a consequence, data stored in the radio IC chip can be called with a transmission signal from the reading unit, and the radio IC chip 20 can be operated as an identification unit for effecting commodity control of the slide fastener 1 or investigating the authenticity when the slide fastener 1 is used independently. Further, when the slide fastener 1 is secured to the securement subject 25 such as bags or clothes, it can be operated as an identification unit for investigating the authenticity of the securement subject 25 as an original product or effecting the commodity control. As required, data and program stored in the radio IC chip can be corrected or updated with a transmission signal from the reading unit.

In FIG. 1, the radio IC chip 20 has no power source for operating the radio IC chip, and the radio IC chip can be operated with an electromotive force from the antenna (not shown) generated by a transmission signal from the reading unit.

According to the slide fastener 1 shown in FIG. 3, as the fastener tape 4, an electrically conductive fiber material 12 is woven or knitted as weaving yarns or knitting yarns into a fiber tape-like base fabric produced by weaving or knitting, for example, a synthetic resin fiber. Because the other configuration is the same as that in FIG. 1, description thereof is omitted while the same reference numerals as used in FIG. 1 are adopted.

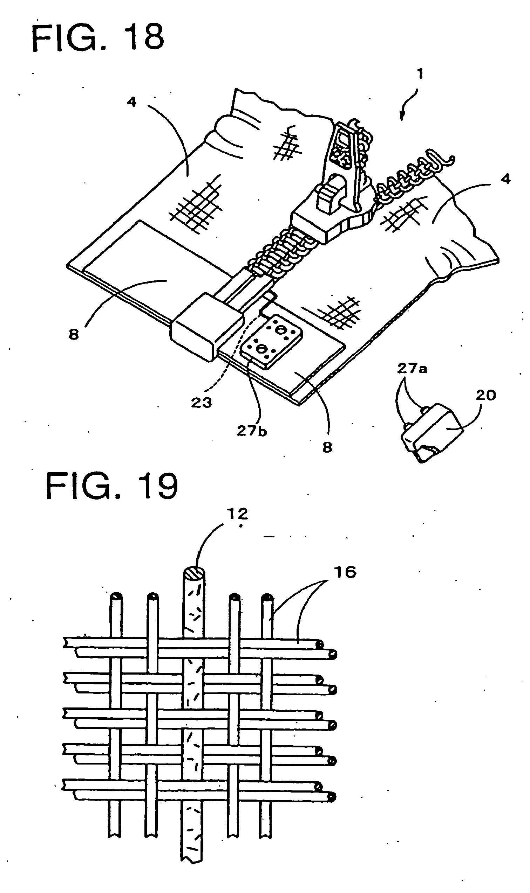

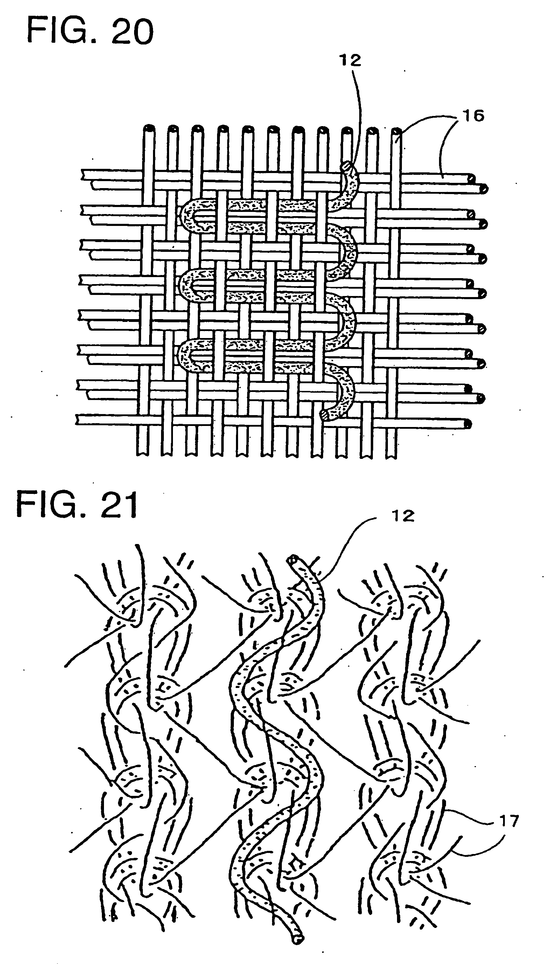

The electrically conductive fiber material 12 in FIG. 3 can be woven or knitted as weaving yarns or knitting yarns as shown in FIGS. 19 to 21 at the same time when the base fabric of the fastener tape 4 is woven or knitted. The electrically conductive fiber material 12 can be used as a signal line for connecting a sensor (not shown) or the like secured to the securement subject 25 with the radio IC chip 20, or as an antenna of the radio IC chip 20. FIGS. 19 to 21 show an enlarged state for exaggeration to facilitate understanding of a weaving pattern or a knitting pattern.

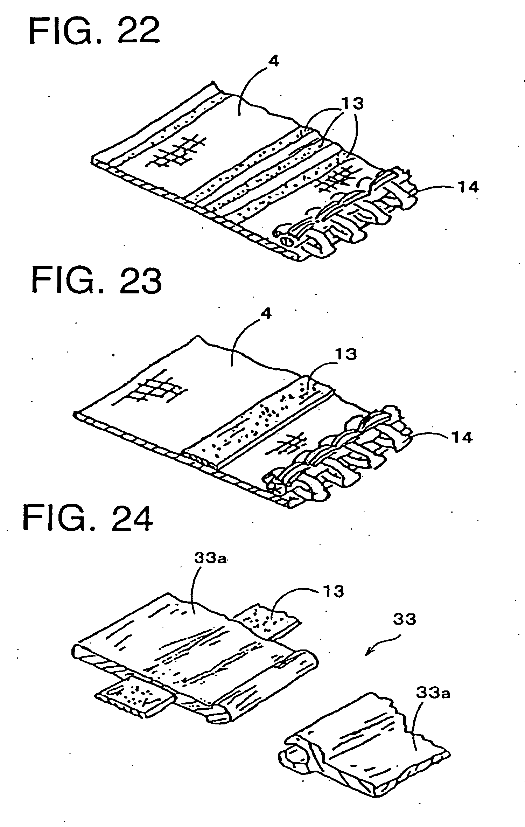

Instead of the electrically conductive fiber material 12 in FIG. 3, an electrically conductive material 13 constituted of a metal thin sheet, conductive resin or the like as shown in FIGS. 22 to 24 can be attached to the face of the fastener tape 4 by various kinds of attachment means such as pasting, bonding, fusion, molding integrally with a tape 33a and printing by coating with electrically conductive paint. FIG. 22 shows an example of printing with the electrically conductive paint, and FIG. 23 shows an example of pasting, bonding and fusion of the electrically conductive material 13. FIG. 24 shows an example in which the electrically conductive material 13 is embedded and integrally molded. FIG. 24 shows a rail-like fastener 33, and when the fastener tape 4 is formed by integral molding in the same way as in the tape 33a of the rail-like fastener 33, it can adopt the same configuration as the tape in FIG. 24. The electrically conductive material 13 can be formed on any one of the front and rear surfaces of the fastener tape 4 as long as connection between the electrically conductive material 13 and the radio IC chip 20 is secured.

When the electrically conductive fiber material 12 or the electrically conductive material 13 is made to function as an antenna of the radio IC chip 20, it is permissible to form a single antenna line by connecting one end to the radio IC chip while opening the other end, or to form two antenna lines by connecting one ends to the radio IC chip while opening the other ends. Further, it is permissible to form an antenna in which the other ends of the two antenna lines are connected or in which the both ends are connected to the radio IC chip while its intermediate portion is disposed in the form of a loop.

According to the present invention, a metal wire such as a flexible wire is included as one example of the electrically conductive fiber material 12.

When the electrically conductive fiber material 12 is used as a signal line for connecting a sensor or the like with the radio IC chip, two electrically conductive fiber materials not short-circuited to each other can be operated as a signal line. By combination of the electrically conductive fiber material 12 with the electrically conductive material 13, an antenna line or a signal line can be formed.

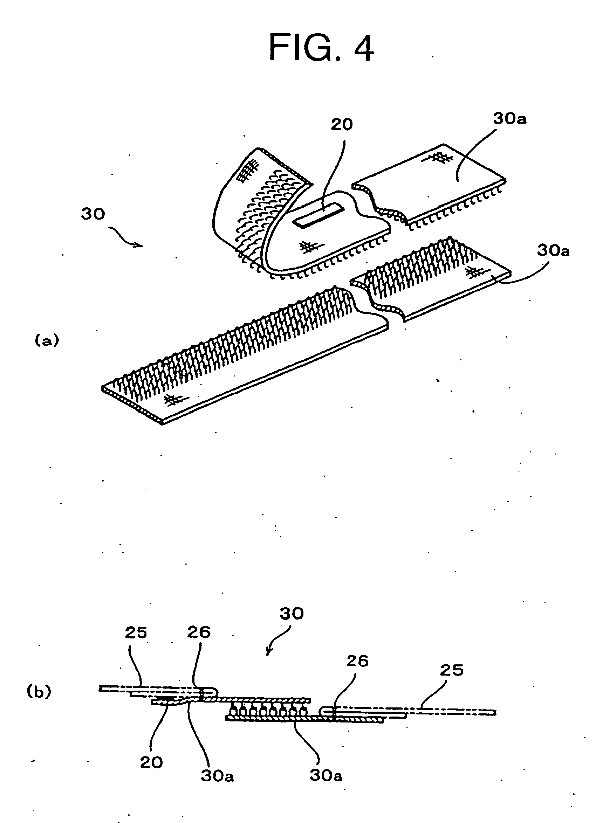

The radio IC chip 20 can be attached to one fastener tape 4 as shown in FIG. 4, and can be also attached to both the fastener tapes 4 as shown in FIG. 3.

FIG. 4 shows a condition in which the radio IC chip 20 is attached to a tape 30a of a surface fastener 30. An antenna (not shown) is formed integrally on the radio IC chip 20. By - securing the tape 30a of the surface fastener 30 on the securement subject 25 by sewing as shown in FIG. 4(b), the attachment state of the radio IC chip 20 can be made invisible from outside.

To attach the radio IC chip 20 to the tape 30a, it is permissible to adopt appropriate attachment means such as pasting, bonding, fusion, and integral molding when the surface fastener is molded. Further, the antenna can be formed integrally with the radio IC chip 20 and can be also formed on the tape 30a of the surface fastener 30 by using a conductor, a conductive resin or the like.

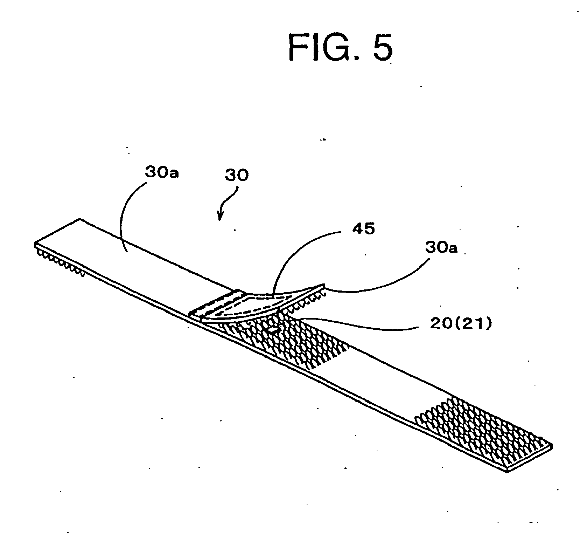

FIG. 5 shows a band using the surface fastener. The band is constituted of a long tape-like surface fastener 30 and a short tape-like surface fastener 30a. One end of the surface fastener 30a is fixed at an intermediate position in the longitudinal direction of the surface fastener 30. Both ends of the surface fastener 30 are provided with engaging portions in which plural attachable/detachable male or female engaging elements are erected, and by engaging the both engaging portions, the band can be converted into a ring. In addition, opposing faces of the surface fastener 30 and the surface fastener 30a are provided with engaging faces in which plural attachable/detachable male or female engaging elements are erected.

By disposing the radio IC chip 20 between the engaging faces of the surface fastener 30, it can be attached to the surface fastener. An antenna (not shown) is formed integrally in the radio IC chip 20. By opening the surface fastener holding the radio IC chip 20, the radio IC chip 20 can be attached to and detached from the surface fastener 30. Because reading from the reading unit can be disabled by only removing the radio IC chip 20 from the surface fastener 30, it is possible to prevent illegal access to the radio IC chip, or the like 20.

Further, by fixing the radio IC chip 20 on the engaging face of the surface fastener 30 and providing the surface fastener 30a capable of covering the radio IC chip 20 with a shielding material 45, it is permissible to make possible exchange of signals by communication between the radio IC chip 20 and an external reading unit when the radio IC chip 20 is not covered with the surface fastener 30a, and to inhibit exchange of signals between the radio IC chip 20 and the reading unit by the shielding material 45 when the surface fastener 30a covers the radio IC chip 20 or the antenna 21 of the radio IC chip 20.

Because the radio IC chip 20 is attachable to and detachable from the surface fastener 30, the securement subject 25 can be washed in a state in which the radio IC chip 20 is detached from the surface fastener 30 when the securement subject 25 having the surface fastener 20 secured thereto is washed. Further, when a necessity of protecting the privacy of individual person occurs, the radio IC chip can be easily removed from the surface fastener.

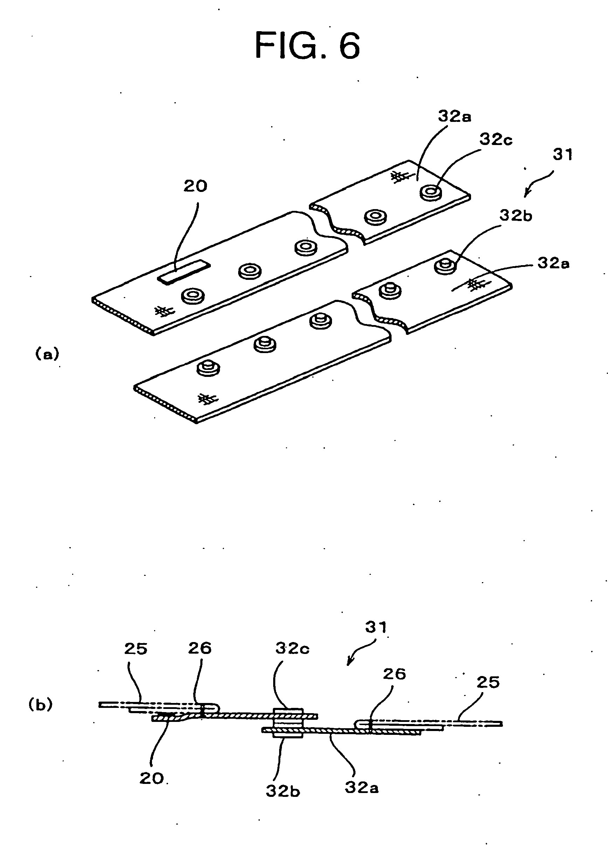

. FIG. 6 (a) shows an example in which the radio IC chip 20 is attached to a tape 32a of a snap fastener 31, and an antenna (not shown) is formed integrally on the radio IC chip 20. By mounting a tape 32a of the snap fastener 31 on the securement subject 25 as shown in FIG. 6(b) by sewing, bonding, fusion and the like, the attachment state of the radio IC chip 20 can be made invisible from outside. To attach the radio IC chip 20 to the tape 32a, it is permissible to adopt appropriate attachment means such as pasting, bonding, fusion and integral molding when the tape 32a is molded.

The snap fastener shown in the figure comprises a male engaging member obtained by integrally molding male snap buttons 32b on front and rear faces via plural mounting holes drilled along the longitudinal direction in the center of a fiber tape-like base fabric produced by weaving or knitting, the mounting holes being provided at a predetermined interval on the base fabric, and a female engaging member obtained by integrally molding plural female snap buttons 32c via the mounting holes in a mating fiber tape-like base fabric.

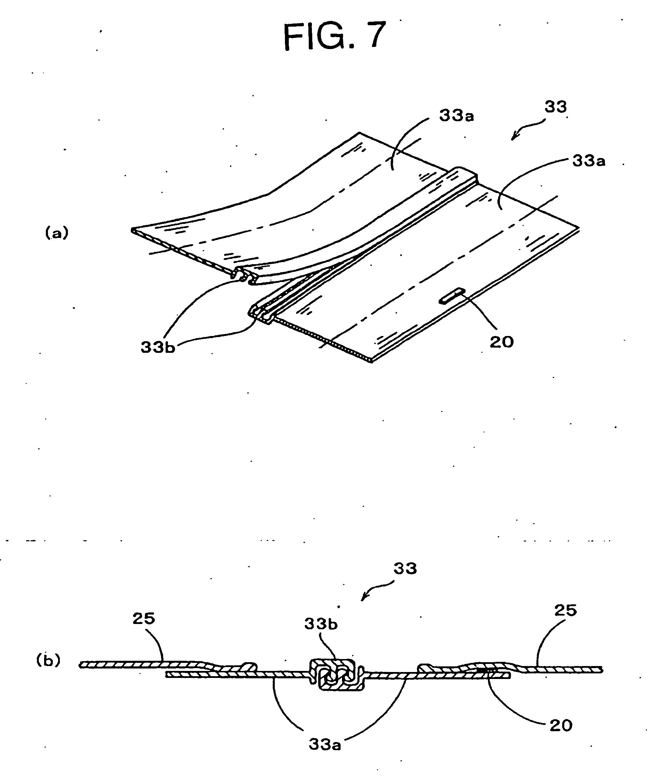

FIG. 7(a) shows an example in which the radio IC chip 20 is attached to the tape 33a of the rail-like fastener 33 having an engaging strip 33b. An antenna (not shown) is formed integrally on the radio IC chip 20. By securing the tape 33a of the rail-like fastener 33 to the securement subject 25 by sewing, bonding, fusion or the like as shown in FIG. 7(b), the attachment state of the radio IC chip 20 can be made invisible from outside. To attach the tape 33a of the radio IC chip 20, it is permissible to adopt an appropriate attachment means such as pasting, bonding, fusion and integral molding when the tape 33a is molded.

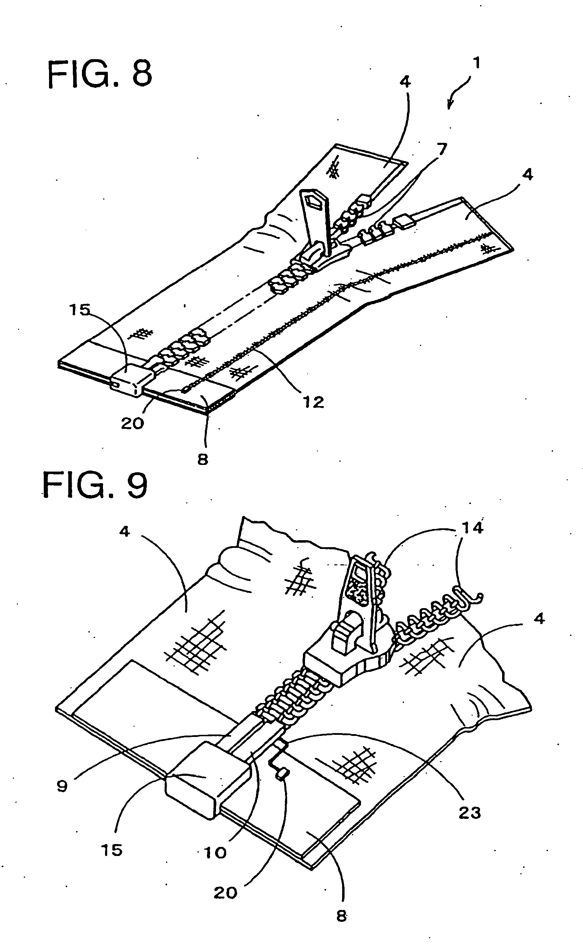

FIGS. 8 to 18 show a first illustrative example of a fastener not falling under the claims of the present invention, and the slide fastener 1 is used as the fastener. Basically, this example not falling under the claims has the same configuration as that of the slide fastener 1 of the preferred embodiment except a configuration in which the radio IC chip 20 is disposed in the vicinity of the separable bottom end stop 15 of the fastener tape 4. Thus, by using the same reference numerals as the preferred embodiment, description of those components is omitted.

The radio IC chip 20 is attached inside a reinforcement tape 8 fused on the bottom end portion of the fastener tape 4 via a bonding layer or on the top face of the reinforcement tape 8 by such a means as bonding, pasting and fusion. Further, the electrically conductive fiber material 12 can be attached by weaving or knitting at the same time when the fastener tape 4 is woven or knitted.

Instead of the electrically conductive fiber material 12, the electrically conductive material can be attached to the fastener tape 4 as described in the preferred embodiment.

When the electrically conductive fiber material 12 or the electrically conductive material 13 is made to function as the antenna line 21 or the signal line 23 of the radio IC chip 20, it can be formed as a single antenna line 21 or a signal line 23 with one end thereof connected to the radio IC chip while the other end being opened. It is permissible to form two antenna lines 21 or signal lines 23 with one ends thereof connected to the radio IC chip while the other ends thereof being opened. In addition, it is permissible to form a loop-like antenna line by connecting the other ends of the two antenna lines 21 with each other while one ends thereof connected to the radio IC chip or by disposing an intermediate portion of the antenna line whose both ends are connected to the radio IC chip, in the form of a loop.

According to this example not falling under the claims, such a metal wire as a flexible wire is included as an example of the electrically conductive fiber material 12.

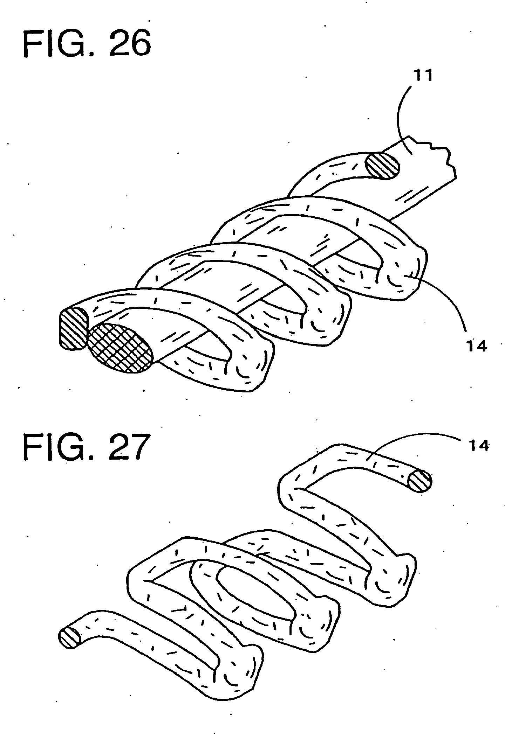

FIG. 9 shows an example of the preferred embodiment in which at least one conductive fiber material 12 constituting the fastener elements 14 and/or a core thread is made to function as an antenna of the radio IC chip 20. By forming conductive resin monofilament constituting the fastener element 14 into a coil-shape or zigzag shape as shown in FIGS. 26 and 27 and connecting one end of the fastener element 14 with the radio IC chip 20 by using the signal line 23, the fastener elements 14 can be equipped with a function as an antenna.

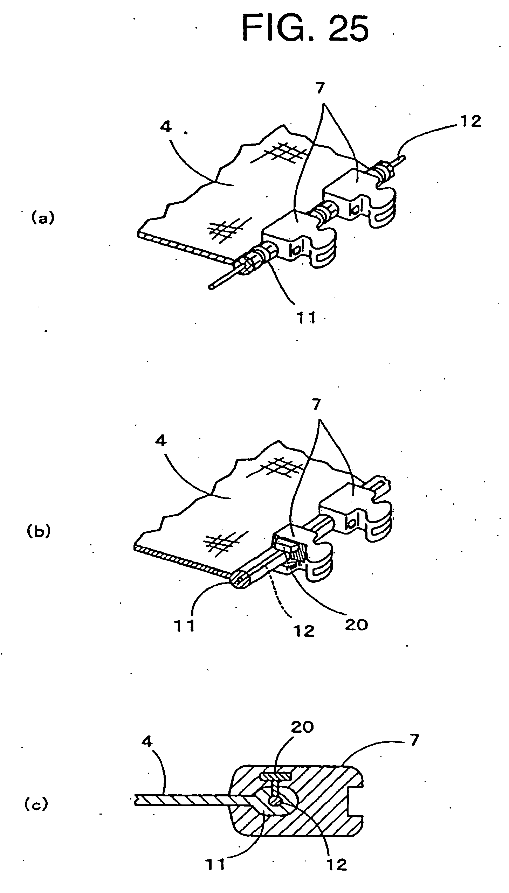

Alternatively, by disposing the electrically conductive fiber material 12 in part of fibers constituting the core thread 11 as shown in FIG. 25(a), the electrically conductive fiber material 12 can be equipped with the function as an antenna. Moreover, by forming the electrically conductive resin monofilament constituting the fastener elements 14 into the form of a coil to provide with the function as an antenna and by disposing the electrically conductive fiber material 12 in part of the fibers constituting the core thread 11, the core thread 11 can be equipped with a function as a magnetic core in the electrically conductive resin monofilament.

By connecting the other end of the fastener elements 14 to the other end of the electrically conductive fiber material 12, it can be made to function as a loop-like antenna. The signal line 23 can be formed of an electrically conductive linear material such as an electrically conductive fiber material and at the same time when the fastener tape 4 is woven and/or knitted. An insert pin 9 or a box pin 10 electrically connected to the fastener elements 14 is constituted of an electrically conductive material, so that the signal line 23 can be electrically connected to the insert pin 9 or the box pin 10.

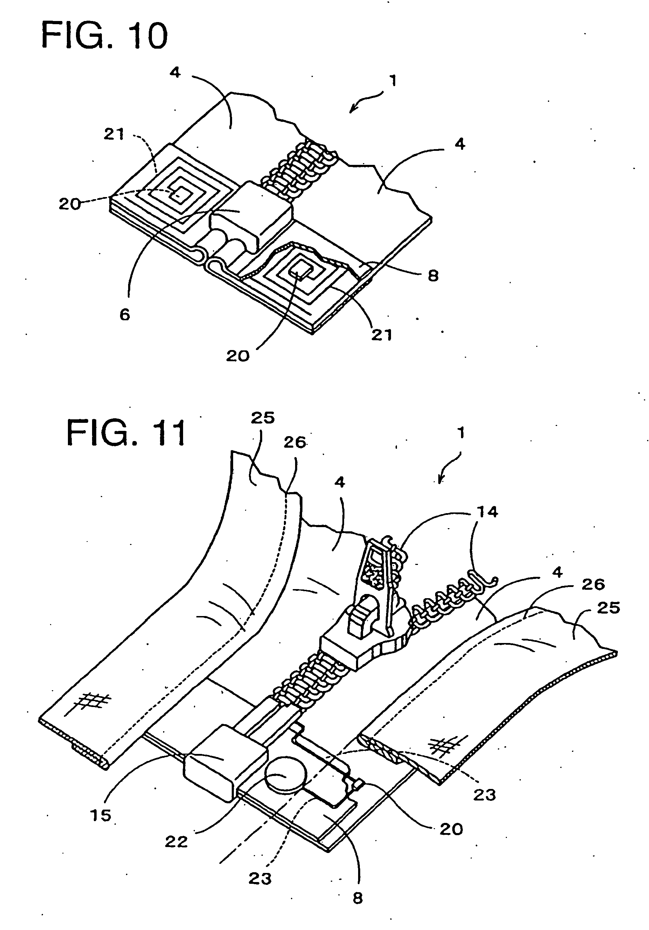

FIG. 10 shows an example not falling under the claims in which the radio IC chip 20 and the antenna 21 are attached to each of a pair of fastener tapes 4. The figure indicates a state in which the radio IC chip 20 and the antenna 21 are attached to the fastener tape 4 in the vicinity of the bottom end stop 6 and covered with the reinforcement tape 8. The two radio IC chips 20 can be equipped with different data or control functions. The radio IC chip 20 can be attached onto the reinforcement tape 8 with appropriate means instead of covering the chip with the reinforcement tape 8.

Further, it is permissible that one radio IC chip is constructed as an active type having a power source battery, and that the other radio IC chip is constructed as a passive type having no power source battery. At this time, both the radio IC chips are synchronized or only one of them is selectively operated. The active type radio IC chip can transmit wave stably over a predetermined range until the service life of the battery is consumed. After the service life of the battery is consumed, the passive type radio IC chip can maintain a function of transmitting a signal in response to a signal from the reading unit.

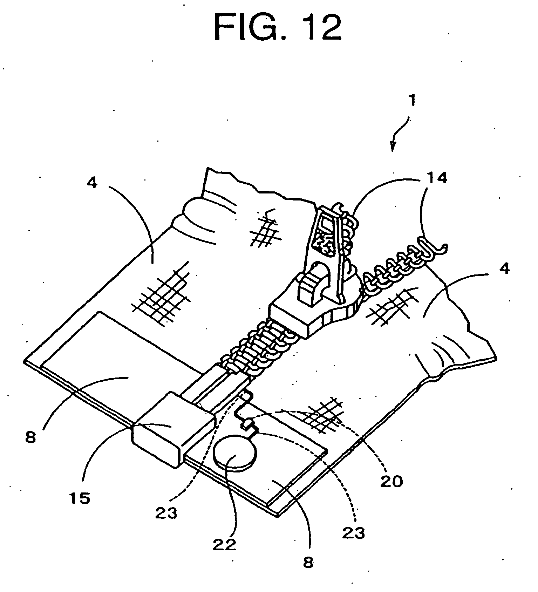

FIGS. 11 and 12 show examples not falling under the claims in which the power source battery 22 for the radio IC chip 20 is provided in the example of FIG. 9. By electrically connecting the power source battery 22 with the radio IC chip 20 by using the signal line 23, current and voltage of the power source battery 22 can be supplied to the radio IC chip 20. The power source battery 22, the signal line 23 and the radio IC chip 20 are covered with the reinforcement tape 8 and can be attached to the fastener tape 4 through the reinforcement tape 8. Further, the power source battery 22 and the radio IC chip 20 can be attached onto the reinforcement tape 8.

Particularly, the power source battery 22 is attached on the reinforcement tape 8 detachably, and the power source battery 22 is provided with a switching function. Consequently, by operating the switch mechanism by pressing the power source battery 22 or the like, the radio IC chip 20 can be operated only when required.

It is permissible that the power source battery 22 is accommodated in a case having the switch function, and that the same case is attached to the reinforcement tape 8. For this reason, the terminology of the power source battery 22 is used here to means both cases where the battery itself is used and where it is accommodated detachably in a case with a switch or without any switch function.

The radio IC chip 20 can be covered with the securement subject 25 in FIG. 11, and therefore, even if the radio IC chip 20 is attached onto the reinforcement tape or between the reinforcement tape 8 and the fastener tape 4, the radio IC chip 20 can be always covered with the securement subject 25.

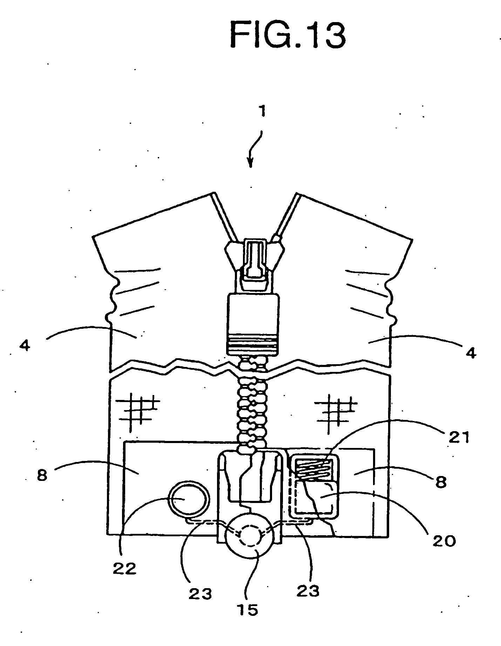

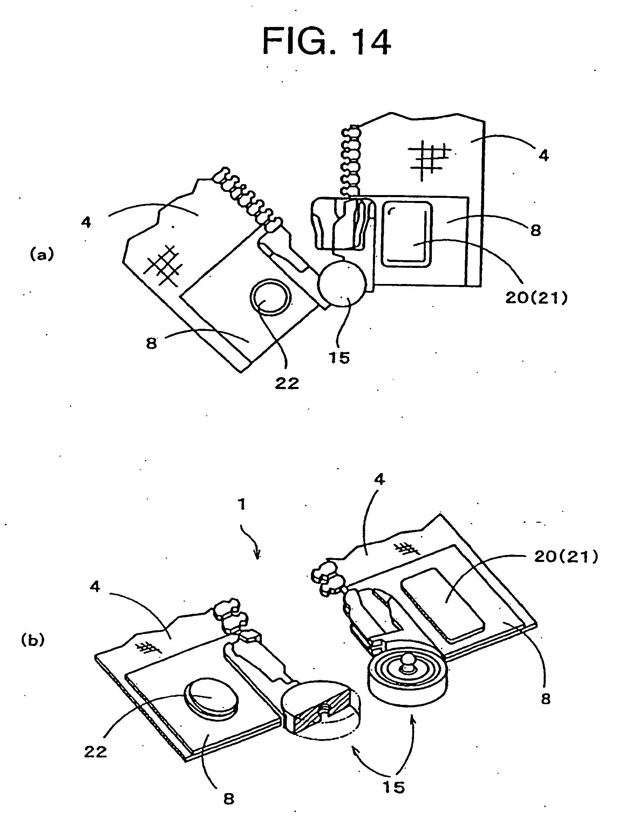

FIG. 13 shows an example not falling under the scope of the claims in which the radio IC chip 20 and the antenna 21 are attached to one of the pair of fastener tapes 4 while the power source battery 22 is attached to the other one. The power source battery 22 and the radio IC chip 20 are electrically connected through the separable bottom end stop 15. Electric connecting terminals are formed between the male member and the female member constituting the separable bottom end stop 15. By fitting the male member and the female member to engage the connecting terminals as shown in FIG. 14(a), the electric connecting terminals are brought into contact with each other so as to form electric connection. If both the male member and female member are separated by releasing the engagement therebetween, the electric connection is broken.

As a consequence, the male member and the female member constituting the separable bottom end stop 15 can be equipped with the switch mechanism. If the power source battery 22 is equipped with the switch function, the switch mechanism is operated by pressing the power source battery 22 or the like, so that the radio IC chip 20 can be operated only when required.

Although the example in which the antenna 21 is constituted together with the radio IC chip 20 in the examples of FIGS. 13 and 14, not falling under the scope of the claims the antenna 21 does not always need to be constituted together with the radio IC chip 20 but may be formed in the fastener tape 4, electrically conductive fastener elements, a core thread having an electrically conductive fiber material or the like.

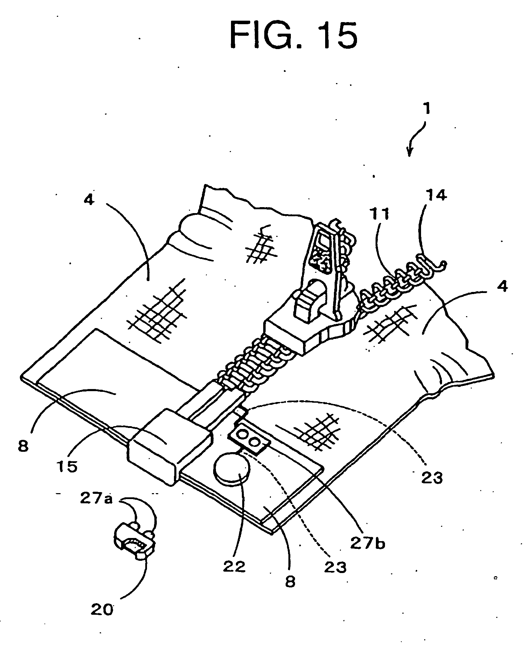

FIGS. 15 to 18 show examples not falling under the scope of the claims that the radio IC chip 20 is constituted on the fastener tape 4 detachably. FIG. 15 shows an example not falling under the claims in which the power source battery 22 and an engaging portion 27b are attached on the reinforcement tape 8 through electrical connected, and the engaging portion 27b is electrically connected to the fastener elements 14 which functions as an antenna or the core thread 11 by using the signal line 23. By engaging the engaging portion 27a of the radio IC chip 20 with the engaging portion 27b attached to the reinforcement tape 8, the radio IC chip with the power source battery can be formed.

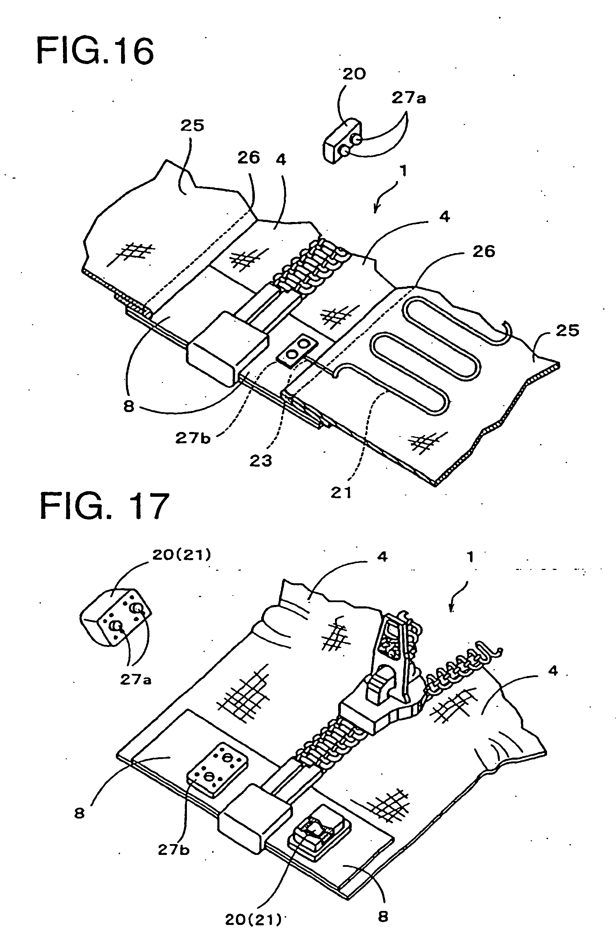

FIG. 16 shows an example not falling under the scope of the claims in which the antenna 21 is formed inside the securement subject 25. In this case, it is permissible to attach the power source battery to the reinforcement tape 8 or to form the antenna 21 in the form of a loop so as to generate an electromotive force.

FIG. 17 shows an example not falling under the scope of the claims in which the radio IC chip 20 and the antenna 21 are constituted on the pair of fastener tapes 4 detachably. FIG. 18 shows an example not falling under the scope of the claims in which the radio IC chip 20 can be detachably attached to the engaging portion 27b secured to the reinforcement tape 8. The figure indicates an example in which the engaging portion 27b is electrically connected to the electrically conductive fastener elements 14 or electrically conductive fiber material inside the core thread 11 having the electrically conductive fiber material.

FIGS. 25(b) and 25(c) show an example not falling under the scope of the claims in which the radio IC chip 20 is accommodated in the element 7 and the electrically conductive fiber material 12 disposed inside the core thread 11 is electrically connected to the radio IC chip 20. By using the electrically conductive fiber material 12 inside the core thread 11 as an antenna, a necessary quantity of the radio IC chips 20 can be attached inside arbitrary elements 7. The radio IC chips 20 can be incorporated inside the elements 7 when the elements 7 are molded.

In the meantime, the radio IC chip can be attached to fixing means of various kinds of fasteners, and for example, in case of the snap button, the radio IC chip can be attached to the inside of the male engaging member or the female engaging member.

The electrically conductive fiber material 12 inside the core thread 11 can be constituted as an antenna by connecting it with the electrically conductive fiber material or electrically conductive material disposed on the fastener tape in the form of a loop.

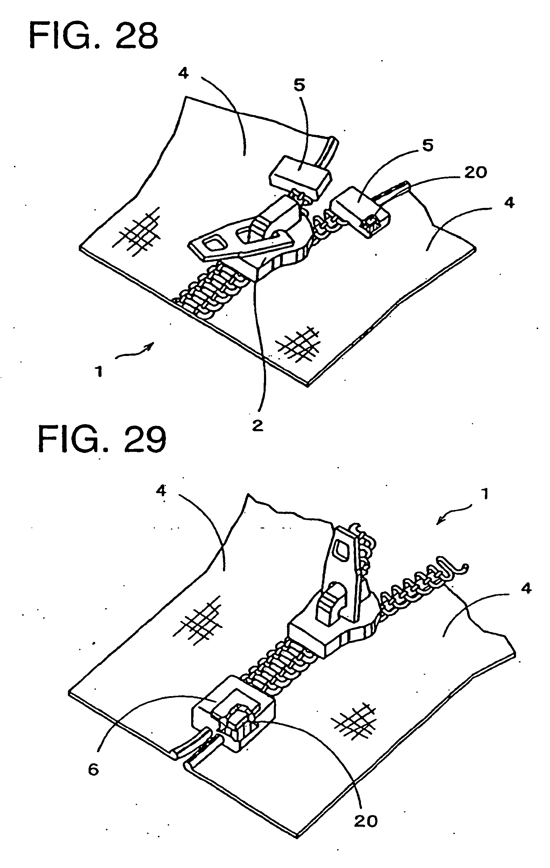

FIG. 28 shows an example not falling under the scope of the claims in which the radio IC chip is incorporated in a top end stop 5, and FIG. 29 shows an example not falling under the scope of the claims in which the radio IC chip is incorporated in a bottom end stop 6. In these examples, as for the antenna, it can be formed integrally with the radio IC chip 20 or it is permissible to use electrically conductive fastener elements, a core thread having an electrically conductive fiber material or the like. Although the figure indicates the example in which the radio IC chip is incorporated in the top and bottom end stops 5, 6, it is permissible to use plagenom (registered trademark) in which a rare earth element is mixed in resin instead of the radio IC chip.

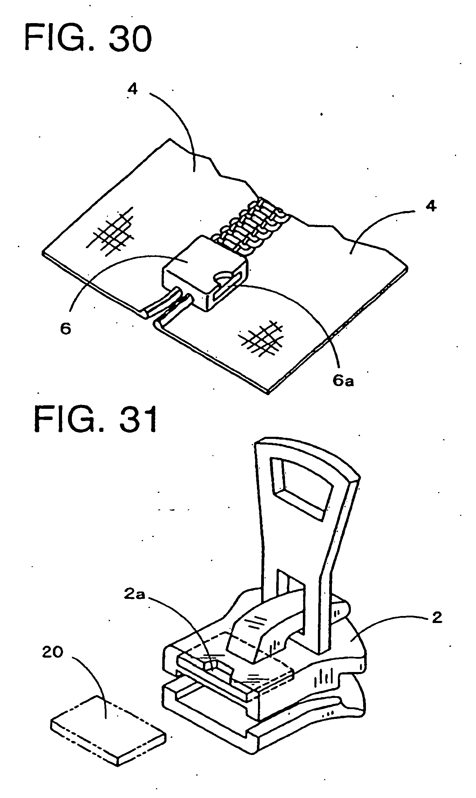

FIG. 30 shows an example not falling under the scope of the claims in which a hole portion 6a is formed in the bottom end stop 6 so that the radio IC chip 20 can be fitted therein detachably. As for the antenna for the radio IC chip 20, it can be formed integrally with the radio IC chip 20 or it is permissible to use an electrically conductive fastener element, a core thread having an electrically conductive fiber material or the like. Because the radio IC chip 20 is detachable from the hole portion 6a, the radio IC chip can be removed out of the hole portion 6a when communication with the reading unit is not desired.

FIG. 31 shows an example not falling under the scope of the claims in which a hole portion 2a which enables the radio IC chip 20 to be fitted detachably is formed in the slider 2. The antenna of the radio IC chip 20 can be formed integrally with the radio IC chip 20. Because the radio IC chip 20 is detachable from the hole portion 2a, the radio IC chip can be removed out of the hole portion 2a anytime when communication with the reading unit is not desired.

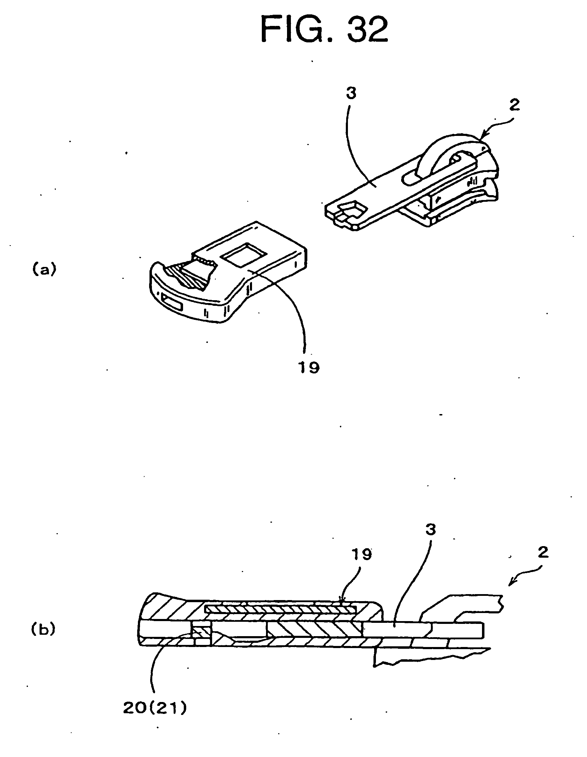

FIG. 32 shows an example not falling under the scope of the claims in which a contact type IC chip 20 is attached to an ornament member 19 which is detachably attached to the pull tab 3. The contact type IC chip 20 is disposed inside the ornament member 19, and part of the IC chip is exposed through an opening portion formed in the surface of the ornament member 19. Communication is enabled by bringing a reader/writer to the IC chip through the opening portion so as to achieve reading/writing of data. The ornament member 19 can be fitted into the pull tab 3 by insertion.

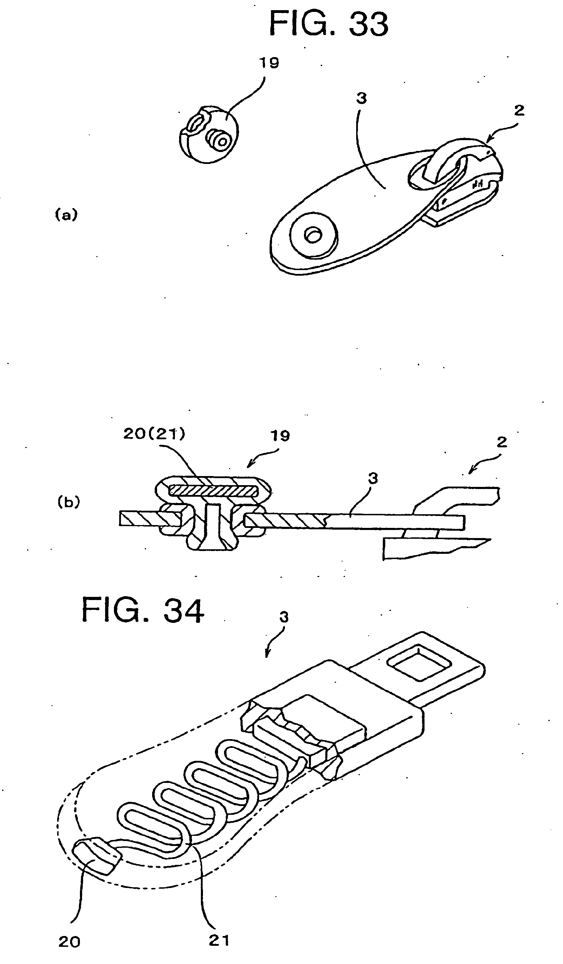

FIG. 33 shows an example not falling under the scope of the claims in which a radio IC chip 20 with an antenna is attached to the ornament member 19 which is detachably attached to the pull tab 3. The radio IC chip 20 is disposed inside the ornament member 19 so that its entire periphery is covered. The ornament member 19 has an engaging head, which can be engaged in an engaging hole portion formed in the pull tab 3 like a snap button.

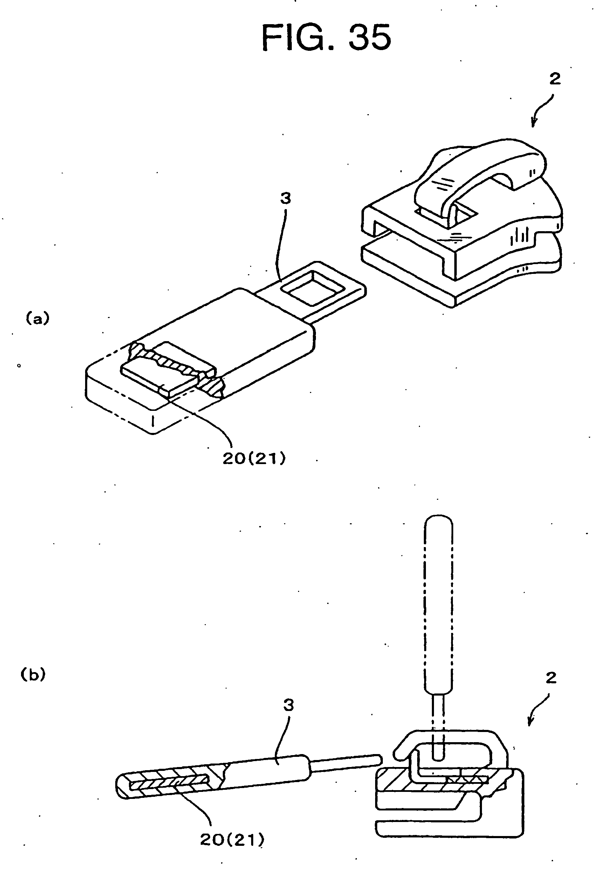

FIGS. 34 and 35 show examples not falling under the scope of the claims that the radio IC chip 20 and antenna 21 are incorporated in the pull tab 3 attachable to/detachable from the slider 2 freely. Because the pull tab 3 is attachable to/detachable from the slider, at any time when communication with the reading unit is not desired, the pull tab 3 always can be removed from the slider 2 so as to prevent illegal access to the radio IC chip, or the like 20. Instead of incorporating the radio IC chip 20 and antenna 21 in the pull tab 3, it is permissible to form so-called plagenom (registered trademark) in which a rare earth element is mixed with resin into a molded resin body and attach to part of the pull tab 3 as an identification medium.

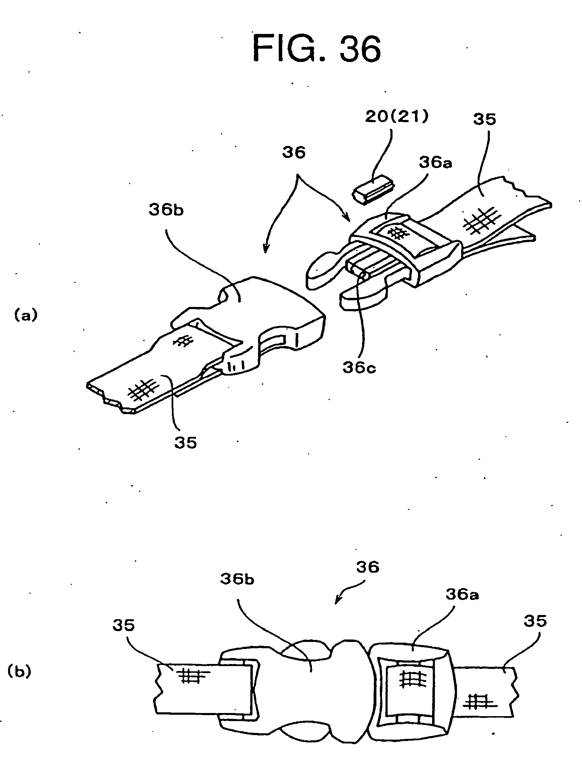

FIG. 36 shows an example not falling under the claims in which the radio IC chip with an antenna is incorporated in a buckle 36, such that the radio IC chip 20 with an antenna is accommodated in an accommodating portion 36c formed in a male member 36a in a fitting state, and the radio IC chip 20 can be removed from the accommodating portion 36c by using a slotted screwdriver. The radio IC chip 20 can be incorporated in the accommodating portion 36 with an adhesive agent as required. FIG. 36 (b) shows a state in which the male member 36a and the female member 36b are engaged with each other. As evident from the figure, the radio IC chip 20 is prevented from being exposed outside if the male member 36a and the female member 36b are engaged each other.

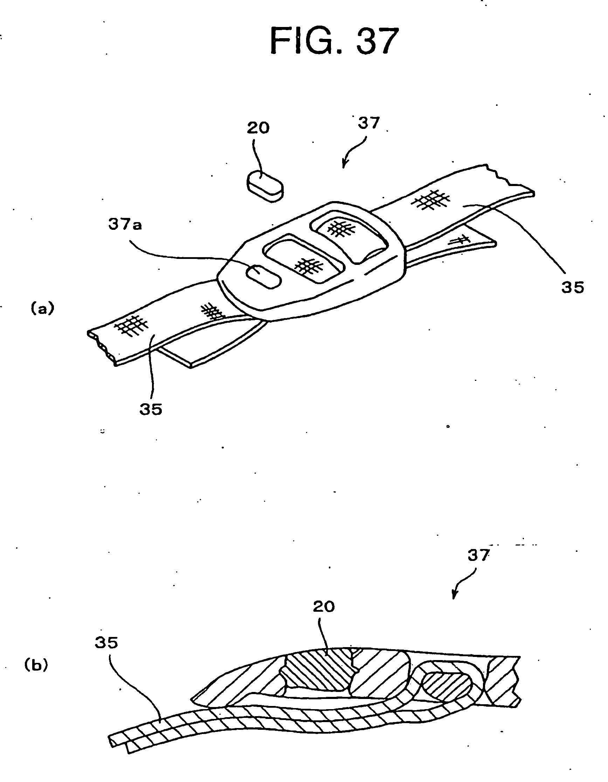

FIGS. 37 (a) and 37 (b) show an example not falling under the claims in which the contact type IC chip is attached to a belt adjuster 37. Concave portions are formed in the inner peripheral face of a hole portion 37a formed in the belt adjuster 37. By engaging convex portions formed on the outer peripheral face of the contact type IC chip 20 with the aforementioned concave portions, the contact type IC chip 20 can be attached detachably. Communication with the contact type IC chip is achieved by bringing a reader/writer into contact with the IC chip exposed from the surface of the belt adjuster 37 so as to read out or write data.

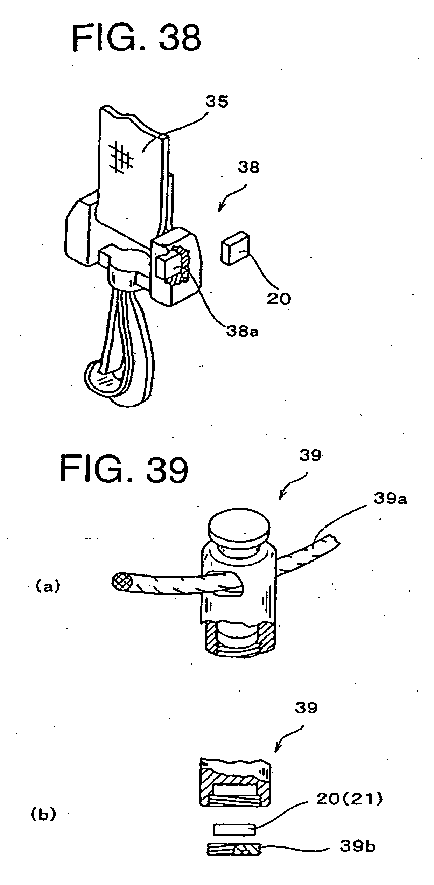

As the identification medium, it is permissible to use the plagenom (registered trademark) in which a rare earth element is mixed with resin as described previously, instead of the radio IC chip or the contact type IC chip. By irradiating with ultraviolet ray, an emission spectrum is generated so as to detect the frequency in a specified wavelength corresponding to changes in the kind of rare earth element, the quantity of addition and the like as information. FIG. 38 shows an example not falling under the claims in which a molded resin body containing the plagenom (registered trademark) is attached to a swivel 38 as the identification medium 20. The identification medium 20 can be fitted to a hole portion 38a formed in the swivel 38. Reference numeral 35 denotes a belt attached such that its length is adjustable freely.

FIG. 39 shows an example not falling under the claims in which the radio IC chip 20 is attached to a cord stopper 39. A space is formed between a lid 39b screwed to the cord stopper 39 main body and the cord stopper 39 main body, and the radio IC chip 20 with an antenna can be accommodated in the space. By removing the lid from the cord stopper main body 39, the radio IC chip can be taken out.

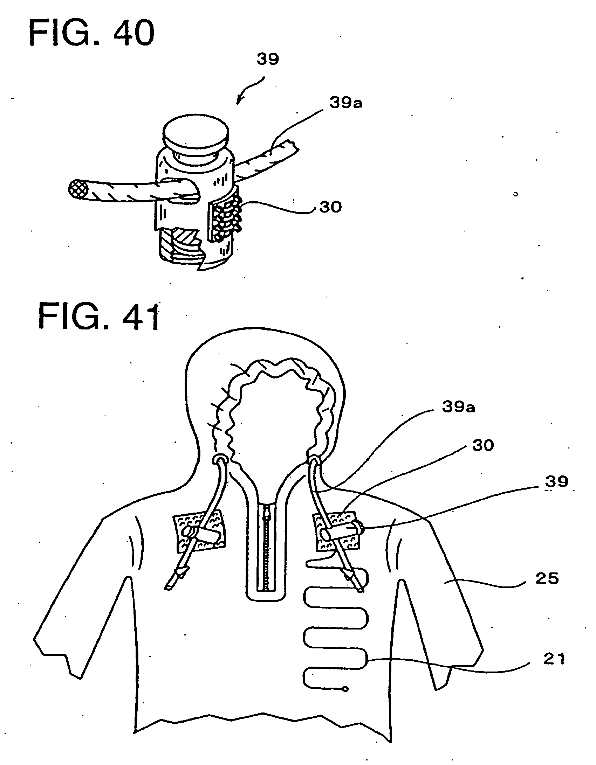

As shown in FIGS. 40 and 41, a surface fastener 30 not falling under the claims having an electric contact piece is formed on the outer peripheral face of the cord stopper 39 main body. By electrically connecting the electric contact piece formed in the surface fastener 30 attached to the securement subject 25 containing the sensor 28 and signal line 29 with the electric contact piece of the cord stopper 39, data detected by the sensor 28 can be fetched into the radio IC chip 20. Further, the fetched in data can be transmitted to the reading unit.

If a sensor for measuring the heart rate is used as the sensor 28, this can be used in such a wide application as for, for example, measuring the heart rate during jogging. Reference numeral 39a denotes a string attached such that its length is adjustable freely.

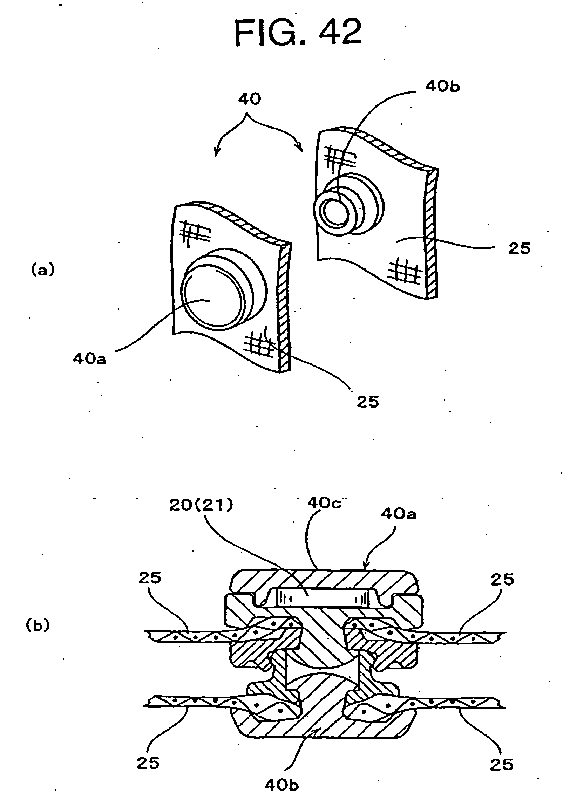

FIG. 42 shows an example not falling under the claims in which the radio IC chip with an antenna is incorporated in a snap button 40 comprised of a male button 40b and a female button 40a fixed to the securement subject 25. By attaching/detaching a lid 40c provided on the male button 40b or the female button 40a, the radio IC chip 20 can be incorporated in the snap button 40. Because the lid 40c is used, the radio IC chip 20 can be taken out of the snap button when not required so as to prevent illegal access to the radio IC chip, or the like.

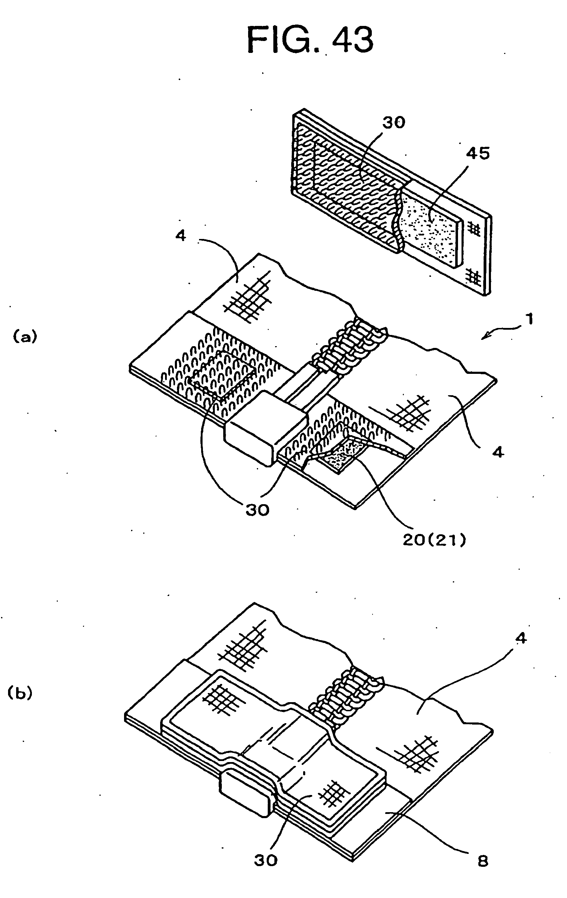

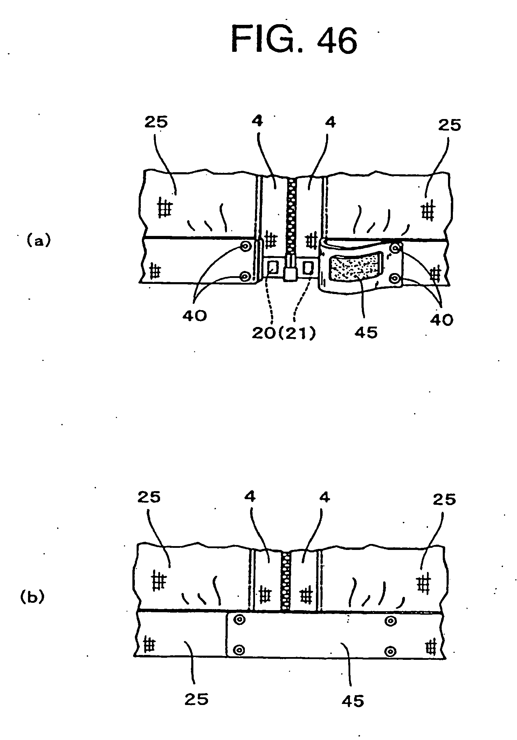

FIGS. 43 to 46 show an example not falling under the claims in which the radio IC chip 20 and the antenna 21 can be shielded by a shielding material 45. As the shielding material 45, a metal sheet, a metallic net, a resin plate containing a magnetic material and the like can be used. A member having the shielding material 45 can be detachably attached to the slide fastener 1 or attached to the securement subject 25. As the configuration which enables the member having the shielding material 45 to be detachably attached to the slide fastener 1 or the securement subject 25, it is permissible to use the surface fastener 30 or an attachable/detachable fastener such as the snap button 40.

As shown in FIG. 43, by engaging the surface fastener 30, the radio IC chip 20 is covered with the shielding material 45, so that transmission of a signal from the radio IC chip 20 or reception of a signal from the reading unit can be shielded.

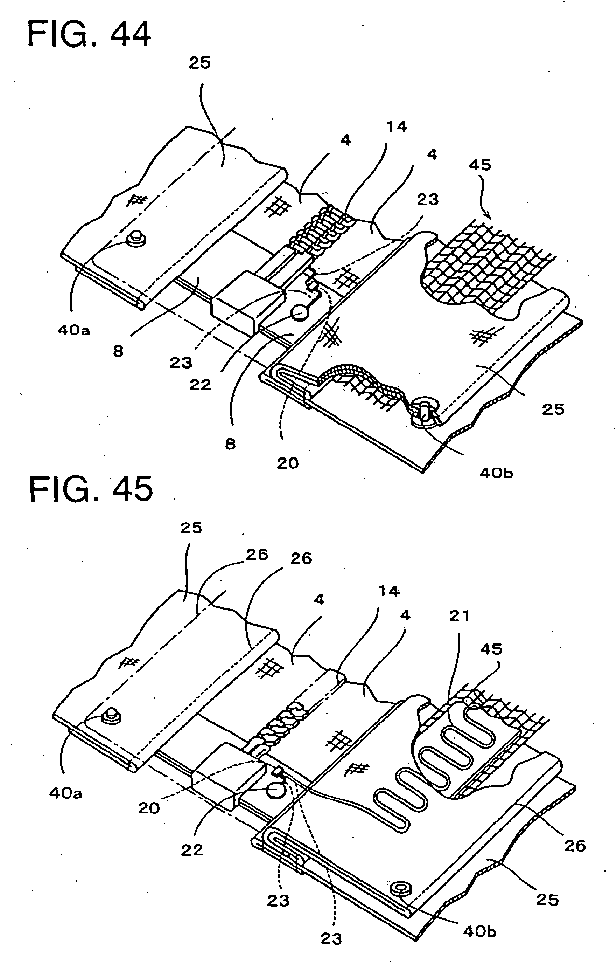

If the antenna is formed in the longitudinal direction of the fastener element 14 or the like as shown in FIG. 44, the entire antenna needs to be covered with the shielding material 45. By forming the antenna 21 on the front face side of the shielding material 45 as shown in FIG. 45 and covering the slide fastener 1 with the securement subject 25 having the shielding material 45, the slide fastener 1 and the antenna 21 can be shielded and covered at the same time.

If the antenna is formed in the longitudinal direction of the fastener element 14 as shown in FIG. 44, the entire antenna needs to be covered with the shielding material 45. By forming the antenna 21 on the front face side of the shielding material 45 and covering the slide fastener 1 with the securement subject 25 having the shielding material 45 as shown in FIG. 45, the slide fastener 1 and the antenna 21 can be shielded and covered at the same time.

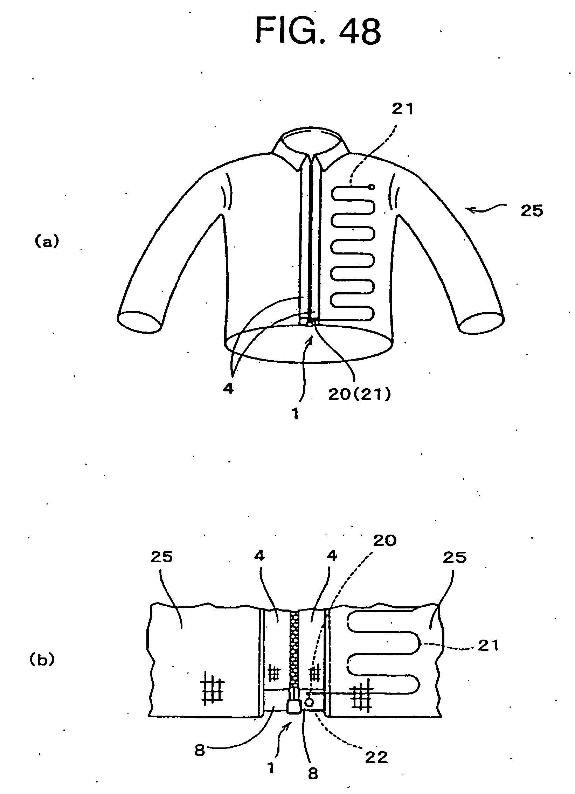

FIGS. 47 to 49 show an example of the preferred embodiment in which the fastener of the present invention is secured to clothes which is the securement subject 25. If the slide fastener 1 is secured to the securement subject 25 as a fastener with the antenna 21, various kinds of sensors 28 and signal line 29 preliminarily attached to the securement subject 25, an electrically conductive fiber material or electrically conductive material provided on the slide fastener 1 is used as a signal line. By connecting the signal line with a signal line composed of the electrically conductive fiber material or the electrically conductive material, values detected by the sensor 28 can be stored in a radio IC chip (not shown) attached to the slide fastener 1.

By exchanging signals between the reading unit 24 disposed outside and the radio IC chip, the detected value by the sensor, the value being stored in the radio IC chip can be transmitted to the reading unit 24. Further, by using the electrically conductive fiber material or the electrically conductive material provided on the slide fastener 1 as a transmitting/receiving antenna, transmission/reception of signals can be carried out by using the transmitting/receiving antenna even if a distance between the reading unit 24 and the radio IC chip is increased.

If the slide fastener 1 is equipped with a power source battery, various kinds of data can be transmitted form the radio IC chip to the reading unit 24 according to a program stored in the radio IC chip, for example, every predetermined time. The radio IC chip attached to the fastener is provided with both functions of the active type having a power source battery and passive type having no power source battery so as to secure a powered drive function with the power source for at least some years. As a result, an electric wave from the radio IC chip at the production stage or sale stage can be received by the reading unit in a stable state over a predetermined range, so that after the service life of the power source is consumed, it is possible to maintain the function of dispatching a signal in response to a signal from the reading unit.

Further, by attaching the active type radio IC chip and the passive type radio IC chip to the fastener, both the radio IC chips can be driven synchronously or only one radio IC chip can be driven selectively. As a consequence, until the service life of the battery is consumed completely by the active type radio IC chip, the radio IC chip can transmit electric waves in a stable state over a predetermined range, and after the service life of the battery ends, the passive type radio IC chip can maintain the function of dispatching a signal in response to a signal from the reading unit.

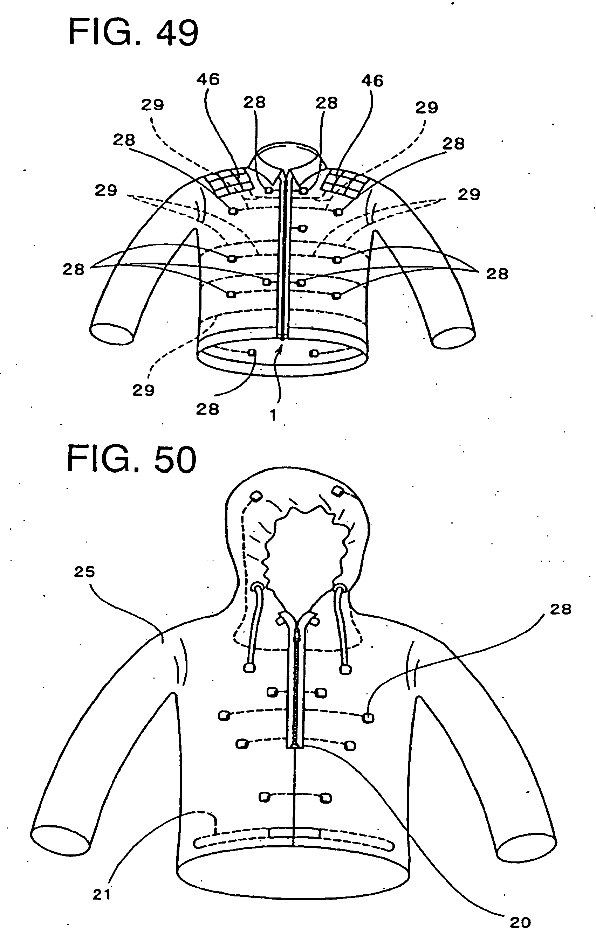

By attaching a solar battery 46 to the securement subject 25 as shown in FIG. 49, this can be used as a power source battery for each sensor attached to the securement subject 25 or the radio IC chip attached to the slide fastener 1.

If the ID tag is employed for medical clothing which is an identification object, a required number of sensors are secured to fabric of the medical clothing. Examples of the sensor include sensors for always monitoring the heart rate, breathing, blood pressure, body temperature, brain wave and the like, and a position sensor for detecting a current position. As the securement subject 25, the fastener equipped with the radio IC chip can be secured to a cap or the like as well as the clothes.

The fastener provided with the radio IC chip of the present invention can cover the radio IC chip completely so that it is not easily visible on the securement subject, and existence of the radio IC chip cannot be recognized easily. Further, the radio IC chip or the like can be disposed at a position where it cannot be removed easily.

As a consequence, by storing security numbers or the like as data to be stored in the radio I chip, reliability of countermeasure against loss, stealing and forgery can be guaranteed sufficiently. Further, by storing commodity information of each product in the memory of the radio IC chip, commodity control from production of product, distribution to sale can be executed reasonably. Moreover, because the radio IC chip can be attached to the fastener detachably, the radio IC chip can be removed from the fastener as required.

In the meantime, the present invention is not restricted to the above-described preferred embodiment and naturally includes a technical scope in which those skilled in the art can change easily from this preferred embodiment.

## Claims

1. A fastener having fixing means attached thereto and a tape (4, 30a, 32a, 33a) to be secured to a securement subject (25), and an identification medium (20) **characterized in that** the identification medium (20) is attached at a position of the tape (4, 30a, 32a, 33a) to be covered with the securement subject (25).

2. The fastener according to claim 1, wherein the identification medium (20) is a radio IC chip, and an antenna (21) or a signal line (23) connected to the radio IC chip are attached to the fastener.

3. The fastener according to claim 1 or 2, wherein the antenna (21) or the signal line (23) is woven or knitted in the tape (4, 30a, 32a, 33a).

4. The fastener according to claim 2 or 3, wherein the antenna (21) or the signal line (23) is pasted to, bonded to, fused with, printed on or embedded in the tape (4, 30a, 32a, 33a).

5. The fastener according to claim 2, wherein the antenna (21) or the signal line (23) is formed in a core thread (11) of the slide fastener (1).

6. The fastener according to claim 5, wherein an electrically conductive fiber material (12) is used as part of fibers constituting the core thread (11).

7. The fastener according to claim 2, wherein the antenna (21) or the signal line (23) is formed in a fastener element (14) of the slide fastener (1), and the fastener element (14) is formed by bending a conductive resin monofilament.

## Patentansprüche

1. Verschluß mit einem daran angebrachten Festlegungsmittel und einem an einem Sicherungsobjekt (25) zu befestigenden Band (4, 30a, 32a, 33a), und einem Identifikationsmedium (20), **dadurch gekennzeichnet, daß** das Identifikationsmedium (20) an einer mit dem Sicherungsgegenstand (25) abzudeckenden Stelle des Bandes (4, 30a, 32a, 33a) angeordnet ist.

2. Verschluß nach Anspruch 1, bei dem das Identifikationsmedium (20) ein Funk-IC-Chip ist und eine mit dem Funk-IC-Chip verbundene Antenne (21) oder Signalleitung (23) an dem Verschluß angeordnet ist.

3. Verschluß nach Anspruch 1 oder 2, bei dem die Antenne (21) oder die Signalleitung (23) in das Band (4, 30a, 32a, 33a) eingewebt, eingestrickt oder eingewirkt ist.

4. Verschluß nach Anspruch 2 oder 3, bei dem die Antenne (21) oder die Signalleitung (23) mit dem Band (4, 30a, 32a, 33a) verklebt, bondiert, verschweißt, auf das Band aufgedruckt oder in das Band eingebettet ist.

5. Verschluß nach Anspruch 2, bei dem die Antenne (21) oder die Signalleitung (23) in einem Kernfaden (11) des Reißverschlusses (1) ausgebildet ist.

6. Verschluß nach Anspruch 5, bei dem ein elektrisch leitendes Fasermaterial (12) als Teil der den Kernfaden (11) bildenden Fasern verwendet ist.

7. Verschluß nach Anspruch 2, bei dem die Antenne (21) oder die Signalleitung (23) in einem Verschlußelement (14) des Reißverschlusses (1) ausgebildet ist und das Verschlußelement (14) durch Biegen eines Monofilaments aus leitendem Harz gebildet ist.

## Revendications

1. Fermeture comportant un moyen de fixation attaché à celle-ci, et une bande (4, 30a, 32a, 33a) devant être fixée solidement à un support de fixation (25), et un moyen d'identification (20), **caractérisée en ce que** le moyen d'identification (20) est fixé à un endroit de la bande (4, 30a, 32a, 33a) devant être recouvert avec le support de fixation (25).

2. Fermeture selon la revendication 1, dans laquelle le moyen d'identification (20) est une puce radio à circuit intégré, et une antenne (21) ou une ligne de signal (23) connectée à la puce radio à circuit intégré sont fixées à la fermeture.

3. Fermeture selon la revendication 1 ou 2, dans laquelle l'antenne (21) ou la ligne de signal (23) est tissée ou tricotée dans la bande (4, 30a, 32a, 33a).

4. Fermeture selon la revendication 2 ou 3, dans laquelle l'antenne (21) ou la ligne de signal (23) est contrecollée, liée ou réunie par fusion avec la bande (4, 30a, 32a, 33a) ou est imprimée sur celle-ci ou noyée dans celle-ci.

5. Fermeture selon la revendication 2, dans laquelle l'antenne (21) ou la ligne de signal (23) est formée dans un fil d'âme (11) de la fermeture à glissière (1).

6. Fermeture selon la revendication 5, dans laquelle un matériau fibreux (12) électroconducteur est utilisé en tant que partie de fibres constituant le fil d'âme (11).

7. Fermeture selon la revendication 2, dans laquelle l'antenne (21) ou la ligne de signal (23) est formée dans un élément de fermeture (14) de la fermeture à glissière (1), et l'élément de fermeture (14) est formé par pliage d'un monofilament de résine conductrice.
